# EUROPÄISCHE PATENTANMELDUNG

(11) **EP 4 266 438 A1**
(43) Veröffentlichungstag der Anmeldung: **25.10.2023**
(21) Anmeldenummer: 22182808.0
(22) Anmeldetag: 04.07.2022
(51) Int. Cl.: H01M 10/04, H01M 10/0587, H01M 50/107, H01M 50/342, H01M 50/528, H01M 50/533, H01M 50/536, H01M 50/548, H01M 50/325, H01M 10/052

(54) **ENERGIESPEICHERELEMENT UND HERSTELLUNGSVERFAHREN**

(30) Priorität: 22.04.2022 EP 22169512
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE); Geiger, Michael, 73479 Ellwangen (DE); Frank, Waldemar, 73479 Ellwangen (DE)
(74) Vertreter: Ostertag & Partner Patentanwälte mbB

(57) **Zusammenfassung**

Ein Energiespeicherelement (100) umfasst ein luft- und flüssigkeitsdicht verschlossenes Gehäuse und einen darin angeordneten Elektroden-Separator-Verbund (104), welcher einen Anodenstromkollektor (106), der mit einer Schicht aus negativem Elektrodenmaterial (107) beladen ist, und einen Kathodenstromkollektor (109), der mit einer Schicht aus positivem Elektrodenmaterial (110) beladen ist, umfasst. Das Gehäuse umfasst ein metallisches, becherförmig ausgebildetes Gehäuseteil (101), das einen Gehäuseboden (101a), eine umlaufende Seitenwand und eine endständige Öffnung aufweist, sowie ein Deckelbauteil (102), das die endständige Öffnung des becherförmig ausgebildeten Gehäuseteils (101) verschließt. Ein Rand (106a, 109a) des Anodenstromkollektors (106) oder des Kathodenstromkollektors (109) ist mit dem Gehäuseboden (101a) elektrisch verbunden ein weiterer Rand (106a, 109a) mit einem Kontaktblech (111), das unmittelbar auf diesem Rand aufsitzt. Das Deckelbauteil (102) umfasst eine metallische Deckelplatte (102a) und einen Anschlusspol (102b), der durch eine Durchbrechung in der Deckelplatte (102a) geführt und gegenüber der Deckelplatte (102) elektrisch isoliert ist. Der Anschlusspol (102b) sitzt dabei unmittelbar auf dem Kontaktblech (111) auf und ist mit diesem durch Verschweißung verbunden. Weiterhin ist der Anschlusspol (102b) durch eine ausgehärtete Vergussmasse (113) aus einem elektrisch isolierenden Kunststoffmaterial von der Deckelplatte (102) elektrisch isoliert. Das Deckelbauteil (102) kann bei der Gehäusemontage hergestellt werden.

## Beschreibung

Die nachstehend beschriebene Erfindung betrifft ein Energiespeicherelement und ein Herstellungsverfahren.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Verbundkörper in Form eines Wickels. Moderne Lithium-Ionen-Zellen dieses Formfaktors können eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle ein Kontaktblech auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Zylindrische Rundzellen wie die in der WO 2017/215900 A1 werden meist als Teil eines Zellverbunds eingesetzt, in dem mehrere Zellen seriell und/oder parallel miteinander verschaltet sind. Häufig ist es gewünscht, die Zellen zum Abgreifen einer elektrischen Spannung nur an einer ihrer Stirnseiten kontaktieren zu müssen. Es ist entsprechend vorteilhaft, an einer der Stirnseiten sowohl einen mit der positiven Elektrode der Zelle verbundenen Anschlusspol als auch einen mit der negativen Elektrode der Zelle verbundenen Anschlusspol vorzusehen.

Aus der US 2006/0019150 A1 ist eine Lithium-Ionen-Rundzelle bekannt, die in einem zylindrischen Gehäuse einen als Wickel ausgebildeten Elektroden-Separator-Verbund umfasst. Das Gehäuse umfasst einen zylindrischen Gehäusebecher aus Metall mit einer Öffnung, die durch ein metallisches Deckelbauteil verschlossen ist. Der Boden des Gehäusebechers ist elektrisch mit der positiven Elektrode des Wickels verbunden, der Gehäusebecher ist daher positiv gepolt. Beide Gehäuseteile stehen unmittelbar miteinander in Kontakt, weshalb das Deckelbauteil ebenfalls positiv gepolt ist. Auf das Deckelbauteil ist ein positiver metallischer Anschlusspol geschweißt. Die negative Elektrode des Wickels ist dagegen mit einem negativen metallischen Anschlusspol verbunden, der durch eine Durchbrechung im Deckelbauteil geführt und gegenüber dem Deckelbauteil elektrisch isoliert ist. Der positive und der negative Anschlusspol sind somit auf der gleichen Seite der Zelle nebeneinander angeordnet, so dass die Zelle über entsprechende Stromleiter leicht in einem Zellverbund integriert werden kann.

Neben ihrer guten Kontaktierbarkeit zeichnet sich die in der US 2006/0019150 A1 beschriebene Zelle auch durch eine integrierte Überdrucksicherung aus. Der Boden weist hierzu einen zentralen, kreisrunden Bereich auf, der von einem ringförmigen Restbereich des Bodens durch eine umlaufende Schwächungslinie abgegrenzt ist und an den innenseitig ein umgebogener Ableiterstreifen geschweißt ist, über den besagter elektrischer Kontakt des Bodens zur positiven Elektrode des Wickels besteht. Im Falle eines Überdrucks innerhalb des Gehäuses kann der kreisrunde Bereich aus dem Boden gesprengt werden. Da durch einen ringförmigen Isolator gewährleistet ist, dass der ringförmige Restbereich keinerlei Kontakt zu dem als Wickel ausgebildeten Elektroden-Separator-Verbund hat, wird dabei die elektrische Verbindung zwischen der positiven Elektrode und dem ringförmigen Restbereich sowie allen damit elektrisch in Kontakt stehenden Bauteilen, einschließlich des positiven Anschlusspols, unterbrochen.

Die negative Elektrode des Wickels ist über einen mehrfach gebogenen Ableiterstreifen elektrisch kontaktiert, dessen oberes Ende an den negativen Anschlusspol gekoppelt ist.

Unter energetischen Aspekten ist die Konstruktion der in der US 2006/0019150 A1 beschriebene Zelle nicht optimal. An beiden Enden des Wickels findet sich ein Totvolumen, zu dessen Überbrückung die genannten Ableiterstreifen erforderlich sind. Diese wirken sich negativ auf die Energiedichte der Zelle aus.

### AUFGABE UND LÖSUNG

Der vorliegenden Erfindung lag die Aufgabe zugrunde, Energiespeicherelemente bereitzustellen, die sich durch eine gegenüber dem Stand der Technik verbesserte Energiedichte auszeichnen und die effizient zu einem Zellverbund verarbeitet werden können. Weiterhin sollen sich die Energiespeicherelemente auch durch eine verbesserte Sicherheit auszeichnen.

Diese Aufgabe wird durch das Energiespeicherelement mit den Merkmalen des Anspruchs 1 gelöst. Auch das Herstellungsverfahren mit den Merkmalen des Anspruchs 10 ist Gegenstand der Erfindung. Bevorzugte Ausführungsformen des erfindungsgemäßen Energiespeicherelements und des erfindungsgemäßen Verfahrens sind in den abhängigen Ansprüchen definiert.

### Erfindungsgemäßes Energiespeicherelement

Das erfindungsgemäße Energiespeicherelement weist die unmittelbar folgenden Merkmale a. bis o. auf:
a. Es umfasst ein luft- und flüssigkeitsdicht verschlossenes Gehäuse und einen darin angeordneten Elektroden-Separator-Verbund.
b. Das Gehäuse umfasst ein metallisches, becherförmig ausgebildetes Gehäuseteil, das einen Gehäuseboden, eine umlaufende Seitenwand und eine endständige Öffnung aufweist.
c. Das Gehäuse umfasst ein Deckelbauteil, das die endständige Öffnung des becherförmig ausgebildeten Gehäuseteils verschließt.
d. Das Deckelbauteil umfasst eine metallische Deckelplatte und einen Anschlusspol, der durch eine Durchbrechung in der Deckelplatte geführt und gegenüber der Deckelplatte elektrisch isoliert ist.
e. Der Elektroden-Separator-Verbund umfasst eine erste flache endständige Stirnseite und eine zweite flache endständige Stirnseite.
f. Der Elektroden-Separator-Verbund umfasst eine Anode mit einem Anodenstromkollektor, der einen ersten Rand und einen dazu parallelen zweiten Rand aufweist.
g. Der Anodenstromkollektor umfasst einen Hauptbereich, der mit einer Schicht aus negativem Elektrodenmaterial beladen ist, sowie einen freien Randstreifen, der sich entlang seines ersten Rands erstreckt und der nicht mit dem Elektrodenmaterial beladen ist.
h. Der Elektroden-Separator-Verbund umfasst eine Kathode mit einem Kathodenstromkollektor, der einen ersten Rand und einen dazu parallelen zweiten Rand aufweist.
i. Der Kathodenstromkollektor umfasst einen Hauptbereich, der mit einer Schicht aus positivem Elektrodenmaterial beladen ist, sowie einen freien Randstreifen, der sich entlang seines ersten Rands erstreckt und der nicht mit dem Elektrodenmaterial beladen ist.
j. Die Anode und die Kathode sind innerhalb des Elektroden-Separator-Verbunds derart angeordnet, dass der erste Rand des Anodenstromkollektors aus der ersten endständigen Stirnseite und der erste Rand des Kathodenstromkollektors aus der zweiten endständigen Stirnseite des Elektroden-Separator-Verbunds austritt.
k. Das Energiespeicherelement umfasst ein Kontaktblech, das unmittelbar auf dem ersten Rand des Anodenstromkollektors oder auf dem ersten Rand des Kathodenstromkollektors aufsitzt.
l. Das Kontaktblech ist mit dem durch die Durchbrechung in der Deckelplatte geführten Anschlusspol elektrisch verbunden.
m. Der nicht mit dem Kontaktblech in unmittelbarem Kontakt stehende erste Rand des Kathodenstromkollektors oder des Anodenstromkollektors ist elektrisch mit dem Gehäuseboden verbunden.
n. Der Anschlusspol sitzt unmittelbar auf dem Kontaktblech auf und ist mit diesem durch Verschweißung verbunden.
o. Der Anschlusspol ist durch eine ausgehärtete Vergussmasse aus einem elektrisch isolierenden Kunststoffmaterial von der Deckelplatte elektrisch isoliert.

Ein Deckelbauteil dieser Ausgestaltung gewährleistet, dass sich zwischen dem Elektroden-Separator-Verbund und der metallischen Deckelplatte im Grunde überhaupt kein Totvolumen findet. Jeglicher Raum zwischen dem Kontaktblech, dem Anschlusspol, der Deckelplatte und gegebenenfalls der O-Ring-förmigen Isolierscheibe kann mit der Vergussmasse gefüllt werden. Ein Deckelbauteil mit den genannten Merkmalen kann sehr kompakt gebaut werden.

Weiterhin hat ein solches Energiespeicherelement den Vorteil, dass es möglich ist, über das Deckelbauteil sowohl die Anode als auch die Kathode elektrisch zu kontaktieren.

### Bevorzugte Ausführungsformen des Deckelbauteils

In bevorzugten Ausführungsformen zeichnet sich das erfindungsgemäße Energiespeicherelement durch mindestens eines der unmittelbar folgenden Merkmale a. und b. aus:
a. Zwischen der Deckelplatte und dem Kontaktblech befindet sich ein ringförmiger Spalt, der mit der Vergussmasse befüllt ist.
b. Der ringförmige Spalt wird radial nach außen durch eine O-Ring-förmige Isolierscheibe aus einem elektrisch isolierenden Kunststoffmaterial begrenzt.

Besonders bevorzugt zeichnet sich das erfindungsgemäße Energiespeicherelement durch eine Kombination beider unmittelbar vorstehender Merkmale a. und b. aus.

In vielen Fällen ist es bevorzugt, dass das becherförmig ausgebildete Gehäuseteil positiv gepolt ist und der Anschlusspol ein negativer Anschlusspol ist. In diesen Fällen zeichnet sich das erfindungsgemäße Energiespeicherelement durch das unmittelbar folgende Merkmal a., gegebenenfalls in Kombination mit mindestens einem weiteren der unmittelbar folgenden Merkmale b. bis e., aus:
a. Das becherförmig ausgebildete Gehäuseteil ist elektrisch mit der Kathode verbunden.
b. Das Kontaktblech sitzt auf dem ersten Rand des Anodenstromkollektors auf und ist mit diesem durch Verschweißung verbunden.
c. Das becherförmig ausgebildete Gehäuseteil besteht aus Aluminium oder einer Aluminiumlegierung.
d. Die Deckelplatte besteht aus Aluminium oder einer Aluminiumlegierung.
e. Das Kontaktblech steht in unmittelbarem Kontakt mit dem durch die Durchbrechung in der Deckelplatte geführten Anschlusspol, ist bevorzugt mit diesem durch Verschweißung verbunden.

Besonders bevorzugt sind die unmittelbar vorstehenden Merkmale a. bis e. in Kombination realisiert.

In dieser Ausführungsform besteht das Gehäuse des Energiespeicherelements in wesentlichen Teilen aus Aluminium oder aus einer Aluminiumlegierung. Dies hat diverse Vorteile. Die Ausbildung von Lokalelementen bei einem Kontakt der Außenseite der Zelle mit Feuchtigkeit ist ausgeschlossen. Das Gehäuse selbst kann im Grunde auf allen seinen Seiten als positiver Anschlusspol dienen. Besonders bevorzugt wird die Zelle allerdings ausschließlich über das Deckelbauteil kontaktiert, wo sich ja auch der negative Anschlusspol befindet. Hierzu kann ein Stromableiter unmittelbar an die Deckelplatte geschweißt werden oder alternativ an dem separaten Anschlusspol fixiert werden, beispielsweise mittels Verschweißung.

Geeignete Aluminiumlegierungen für das becherförmig ausgebildete Gehäuseteil und die Deckelplatte sind beispielsweise AI-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

In weiteren Fällen kann es bevorzugt sein, dass das becherförmig ausgebildete Gehäuseteil negativ gepolt ist und der Anschlusspol ein positiver Anschlusspol ist. In diesen Fällen zeichnet sich das erfindungsgemäße Energiespeicherelement durch das unmittelbar folgende Merkmal a., gegebenenfalls in Kombination mit mindestens einem weiteren der unmittelbar folgenden Merkmale b. bis e., aus:
a. Das becherförmig ausgebildete Gehäuseteil ist elektrisch mit der Anode verbunden.
b. Das Kontaktblech sitzt auf dem ersten Rand des Kathodenstromkollektors auf und ist mit diesem durch Verschweißung verbunden.
c. Das becherförmig ausgebildete Gehäuseteil besteht aus Kupfer oder Nickel oder einer Kupfer- oder Nickellegierung oder Stahl oder vernickeltem Stahl.
d. Die Deckelplatte besteht aus Kupfer oder Nickel oder einer Kupfer- oder Nickellegierung oder Stahl oder vernickeltem Stahl.
e. Das Kontaktblech steht in unmittelbarem Kontakt mit dem durch die Durchbrechung in der Deckelplatte geführten Anschlusspol, ist bevorzugt mit diesem durch Verschweißung verbunden.

Besonders bevorzugt sind die unmittelbar vorstehenden Merkmale a. bis e. in Kombination realisiert.

In dieser Ausführungsform besteht das Gehäuse des Energiespeicherelements in wesentlichen Teilen aus Kupfer oder Nickel oder einer Kupfer- oder Nickellegierung oder Stahl oder vernickeltem Stahl.

Geeignete Edelstähle sind beispielsweise Edelstähle vom Typ 1.4303 oder 1.4404 oder vom Typ SUS304 oder vernickelte Stähle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage.

In einer Weiterbildung eines erfindungsgemäßen Energiespeicherelements, bei dem das becherförmig ausgebildete Gehäuseteil positiv gepolt ist und der Anschlusspol ein negativer Anschlusspol ist, zeichnet sich das Energiespeicherelement durch die unmittelbar folgenden Merkmale a. bis d. aus:
a. Das Kontaktblech besteht aus Nickel oder Kupfer oder Titan oder eine Nickel- oder Kupfer- oder Titanlegierung oder Edelstahl.
b. Der Anschlusspol ist ein Bimetall-Anschlusspol und umfasst ein Polunterteil aus Nickel oder Kupfer oder Titan oder einer Nickel- oder Kupfer- oder Titanlegierung oder Edelstahl und ein Poloberteil aus Aluminium oder einer Aluminiumlegierung.
c. Das Polunterteil ist an das Kontaktblech geschweißt.
d. Das Polunterteil und das Kontaktblech und der Anodenstromkollektor bestehen aus dem gleichen Material.

Besonders bevorzugt zeichnet sich das erfindungsgemäße Energiespeicherelement durch eine Kombination aller unmittelbar vorstehenden Merkmale a. bis d. aus.

Das erfindungsgemäße Energiespeicherelement zeichnet sich in dieser Ausführungsform also durch einen Anschlusspol aus, der zwei unterschiedliche metallische Werkstoffe, auf der einen Seite Nickel oder Kupfer oder Titan oder die Nickel- oder Kupfer- oder Titanlegierung oder Edelstahl und auf der anderen Seite Aluminium oder die Aluminiumlegierung umfasst.

Es ist so möglich, erfindungsgemäße Energiespeicherelemente zu bauen, deren Gehäuseaußenseite komplett aus Aluminium oder aus einer Aluminiumlegierung gebildet ist.

Das Poloberteil ist von außen zugänglich und kann beispielsweise mit einer Stromleiter aus Aluminium verschweißt werden. Derartige Energiespeicherelemente bieten den signifikanten Vorteil, dass sie sich einfach in einen Zellverbund integrieren lassen. Hierbei werden Pole mehrerer Energiespeicherelemente über einen gemeinsamen Stromleiter miteinander verschaltet. Produktionstechnisch kann es von Vorteil sein, die Pole der Zellen mittels Laser an den Stromleiter zu schweißen. Dies ist in der Regel unproblematisch nur dann möglich, wenn die zu verschweißenden Materialien die gleichen sind. Beispielsweise ist die Verschweißung eines Anschlusspols aus Kupfer an einen Stromleiter aus Aluminium mittels Laser nur schwer oder gar nicht zu realisieren. Mit dem Poloberteil aus Aluminium oder der Aluminiumlegierung ist dies hingegen problemlos möglich. So können selbst negative Anschlusspole einer Zelle mittels Laser über einen gemeinsamen Stromleiter aus Aluminium verbunden werden.

Geeignete Aluminiumlegierungen sind beispielsweise AI-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %. Geeignete Edelstähle sind beispielsweise Edelstähle vom Typ 1.4303 oder 1.4404 oder vom Typ SUS304 oder vernickelte Stähle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage.

In einer Weiterbildung eines erfindungsgemäßen Energiespeicherelements, bei dem das becherförmig ausgebildete Gehäuseteil negativ gepolt und der Anschlusspol ein positiver Anschlusspol ist, zeichnet sich das Energiespeicherelement durch die unmittelbar folgenden Merkmale a. bis c. aus:
a. Das Kontaktblech besteht aus Aluminium oder aus einer Aluminiumlegierung.
b. Der Anschlusspol besteht aus Aluminium oder einer Aluminiumlegierung.
c. Das Kontaktblech und der Anschlusspol und Kathodenstromkollektor bestehen aus dem gleichen Material.

Besonders bevorzugt zeichnet sich das erfindungsgemäße Energiespeicherelement durch eine Kombination aller unmittelbar vorstehenden Merkmale a. bis c. aus.

Es ist so auch in dieser Ausführungsform möglich, erfindungsgemäße Energiespeicherelemente zu bauen, deren Gehäuseaußenseite komplett aus Aluminium oder aus einer Aluminiumlegierung gebildet ist.

### Bevorzugte Ausführungsformen des Kontaktblechs / Anbindung des Kontaktblechs an den Anodenstromkollektor und den negativen Anschlusspol oder an den Kathodenstromkollektor und den positiven Anschlusspol

Das Kontaktblech ist mit dem durch die Durchbrechung in der Deckelplatte geführten Anschlusspol und entweder mit dem Anodenstromkollektor oder mit dem Kathodenstromkollektor elektrisch verbunden. Insbesondere ist es unmittelbar an den Anschlusspol und/oder den jeweiligen Stromkollektor geschweißt.

In einer besonders bevorzugten Ausführungsform der Erfindung, bei denen das becherförmig ausgebildete Gehäuseteil positiv gepolt ist und der Anschlusspol ein negativer Anschlusspol ist, zeichnet sich das mit dem negativen Anschlusspol elektrisch verbundene Kontaktblech durch mindestens eines der unmittelbar folgenden Merkmale a. bis c. aus:
a. Das Kontaktblech besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblech besteht aus dem gleichen Material wie der negative Anschlusspol oder wie das Polunterteil des negativen Anschlusspols.
c. Das Kontaktblech besteht aus dem gleichen Material wie der Anodenstromkollektor.

Es ist bevorzugt, dass die unmittelbar vorstehenden Merkmale a. und b., besonders bevorzugt auch die Merkmale a. bis c., in Kombination miteinander realisiert sind.

In einer besonders bevorzugten Ausführungsform der Erfindung, bei denen das becherförmig ausgebildete Gehäuseteil negativ gepolt ist und der Anschlusspol ein positiver Anschlusspol ist, zeichnet sich das mit dem positiven Anschlusspol elektrisch verbundene Kontaktblech durch mindestens eines der unmittelbar folgenden Merkmale a. bis c. aus:
a. Das Kontaktblech besteht aus Aluminium oder aus einer Aluminiumlegierung.
b. Das Kontaktblech besteht aus dem gleichen Material wie der positive Anschlusspol.
c. Das Kontaktblech besteht aus dem gleichen Material wie der Kathodenstromkollektor.

Es ist besonders bevorzugt, dass die unmittelbar vorstehenden Merkmale a. und b., bevorzugt auch die Merkmale a. bis c., in Kombination miteinander realisiert sind.

Wenn das Kontaktblech aus dem gleichen Material wie der positive Anschlusspol und/oder der Kathodenstromkollektor besteht, ist das Verschweißen dieser Bauteile ohne Probleme möglich.

Als Aluminiumlegierungen kommen für das Kontaktblech beispielsweise AI-Legierungen vom Typ 1235, 1050, 1060, 1070, 3003, 5052, Mg3, Mg212 (Serie 3000) und GM55 in Frage. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

In möglichen bevorzugten Weiterbildungen der Erfindung zeichnet sich das Kontaktblech durch mindestens eines der unmittelbar folgenden Merkmale a. bis f. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine polygonale Platte.
d. Das Kontaktblech ist derart dimensioniert, dass es mindestens 40 % der Stirnseite, bevorzugt mindestens 60 %, besonders bevorzugt mindestens 80 %, der Stirnseite, aus der der Rand des Stromkollektors, auf dem es aufsitzt, austritt, abdeckt.
e. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, dem ersten Rand des Anodenstromkollektors oder auf dem ersten Rand des Kathodenstromkollektors aufsitzt.
f. Das Kontaktblech ist im Bereich der Sicke mit dem ersten Rand des Anodenstromkollektors oder dem ersten Rand des Kathodenstromkollektors verschweißt.

Es ist besonders bevorzugt, dass die unmittelbar vorstehenden Merkmale a. bis c., besonders bevorzugt die unmittelbar vorstehenden Merkmale a. bis d., in Kombination miteinander realisiert sind. In einer bevorzugten Ausführungsform sind die Merkmale a. bis d. in Kombination mit den Merkmalen e. und f. realisiert.

Die möglichst großflächige Abdeckung der Stirnseite ist für das thermische Management des erfindungsgemäßen Energiespeicherelements von Bedeutung. Je größer die Abdeckung ist, desto eher ist es möglich, den ersten Rand des jeweiligen Stromkollektors möglichst über seine gesamte Länge zu kontaktieren. In Elektroden-Separator-Verbund gebildete Wärme kann so gut über das Kontaktblech abgeführt werden.

Es hat sich in einigen Ausführungsformen als vorteilhaft erwiesen, den Rand des jeweiligen Stromkollektors, auf den das Kontaktblech aufgesetzt wird, vor dem Aufsetzen des Kontaktblechs einer Vorbehandlung zu unterziehen. Insbesondere kann auch hier in den Rand mindestens eine Vertiefung eingefalzt werden, die zu der mindestens einen Sicke bzw. der länglichen Erhöhung auf der der ersten endständigen Stirnseite zugewandten Flachseite des Kontaktblechs korrespondiert.

Der Rand des Stromkollektors kann auch durch eine Vorbehandlung einer gerichteten Umformung unterzogen worden sein. Beispielsweise kann er in eine definierte Richtung umgebogen sein.

In einigen besonders bevorzugten Ausführungsformen ist das Kontaktblech in die Stirnseite des Wickels eingepresst. In diesem Fall bedarf es der mindestens einen Sicke nicht. Das Kontaktblech ist in diesen Fällen bevorzugt polygonal oder streifenförmig ausgebildet und deckt bevorzugt mindestens 40 %, besonders bevorzugt mindestens 60 %, insbesondere mindestens 80 %, der Stirnseite, in die es eingepresst ist, ab.

### Primär- und Sekundärsicherung

In einer besonders bevorzugten Ausführungsform der Erfindung zeichnet sich das erfindungsgemäße Energiespeicherelement durch die folgenden Merkmale a. und b. aus:
a. Der Gehäuseboden des becherförmig ausgebildeten Gehäuseteils weist eine Primärsicherung gegen internen Überdruck in Form einer Durchbrechung, die mittels einer metallischen Membran verschlossen ist, auf.
b. Der Gehäuseboden des becherförmig ausgebildeten Gehäuseteils weist eine Sekundärsicherung gegen internen Überdruck in Form mindestens einer Nut auf seiner Innenseite oder seiner Außenseite auf.

Die Primärsicherung hat die Funktion, beim Auftreten eines unzulässigen Überdrucks oberhalb eines definierten Schwellwerts einen kontrollierten Druckausgleich herbeizuführen. Die Membran wird in diesem Fall durch den Druck aufgesprengt oder abgesprengt, im Gehäuseinneren gebildetes Gas kann durch die Durchbrechung im Gehäuseboden entweichen.

Die Sekundärsicherung ist für Fälle vorgesehen, bei denen ein Druckausgleich über die Primärsicherung nicht schnell genug erfolgt. In diesem Fall kann der Gehäuseboden bedingt durch den Überdruck entlang der Nut, die nichts anderes als eine Schwächung der Struktur des Gehäusebodens darstellt, aufreißen, so dass eine Austrittsöffnung mit vergleichsweise großem Querschnitt entsteht, über den im Gehäuseinneren gebildetes Gas entweichen kann.

Solche Sicherungslösungen sind für sich genommen bereits bekannt. Durch geeignete Ausbildung der Nut und der Membran kann präzise eingestellt werden, bei welchem Druck die Sicherungen auslösen.

Da die genannten Sicherheitsfunktionen nicht - wie bei vielen klassischen Zellen - im Deckelbauteil sondern stattdessen im Gehäuseboden integriert sind, ist es möglich, das Deckelbauteil äußerst kompakt zu bauen. Es ist auch nicht zwingend eine Vorassemblierung des Deckelbauteils erforderlich. Das Deckelbauteil kann vielmehr bei der Gehäusemontage hergestellt werden, wie unten noch detaillierter beschrieben wird.

In besonders bevorzugten Ausführungsformen zeichnet sich das erfindungsgemäße Energiespeicherelement durch mindestens eines der unmittelbar folgenden Merkmale a. bis e. aus:
a. Die Deckelplatte ist in die endständige Öffnung des becherförmig ausgebildeten Gehäuseteils eingeschweißt.
b. Das Kontaktblech ist mit dem ersten Rand des Anodenstromkollektors oder dem ersten Rand des Kathodenstromkollektors durch Verschweißung verbunden.
c. Der nicht mit dem Kontaktblech in unmittelbarem Kontakt stehende erste Rand des Anodenstromkollektors oder des Kathodenstromkollektors sitzt unmittelbar auf dem Gehäuseboden auf.
d. Der nicht mit dem Kontaktblech in unmittelbarem Kontakt stehende erste Rand des Anodenstromkollektors oder des Kathodenstromkollektors ist durch Verschweißung mit dem Gehäuseboden verbunden.
e. Die mindestens eine Nut findet sich auf der Innenseite des Gehäusebodens.

Bevorzugt sind die unmittelbar vorstehenden Merkmale a. bis d. in Kombination realisiert, besonders bevorzugt die unmittelbar vorstehenden Merkmale a. bis e..

In einer weiteren besonders bevorzugten Ausführungsform der Erfindung zeichnet sich das erfindungsgemäße Energiespeicherelement durch das folgende Merkmal a. aus:
a. Die metallische Membran ist durch Verschweißung am Boden des becherförmig ausgebildeten Gehäuseteils fixiert.

Der Boden des becherförmigen Gehäuseteils kann eine flache Vertiefung aufweisen, in die die Membran eingelegt wird, so dass sie nicht aufträgt. Bevorzugt ist sie über eine kreisförmige Schweißnaht, die um die Durchbrechung im Boden herumgeführt ist, mit dem Boden verbunden.

Die Dicke der Membran kann an den Druck, bei dem die Sicherung auslösen soll, angepasst werden.

### Bevorzugte Ausbildungen des Gehäusebodens

In bevorzugten Ausführungsformen zeichnet sich das erfindungsgemäße Energiespeicherelement durch mindestens eines der unmittelbar folgenden Merkmale a. bis f. aus:
a. Der Gehäuseboden weist mindestens eine Sicke auf, die auf seiner Außenseite als längliche Vertiefung und auf seiner Innenseite als längliche Erhöhung zu Tage tritt, wobei der erste Rand des Anodenstromkollektors oder der erste Rand des Kathodenstromkollektors auf der Innenseite aufsitzt.
b. Der Gehäuseboden ist im Bereich der Sicke mit dem ersten Rand des Anodenstromkollektors oder dem ersten Rand des Kathodenstromkollektors verschweißt.
c. Die Durchbrechung ist im Zentrum des Gehäusebodens positioniert.
d. Die mindestens eine Sicke umfasst mehrere lineare Sicken, insbesondere drei Sicken, die in sternförmiger Anordnung um die Durchbrechung herum angeordnet sind.
e. Die mindestens eine Nut umfasst mehrere lineare Teilabschnitte, die in sternförmiger Anordnung um die Durchbrechung herum angeordnet sind.
f. Die mindestens eine Nut umfasst einen um die Durchbrechung herumlaufenden Teilabschnitt, der die sternförmig angeordneten linearen Teilabschnitte miteinander verbindet.

Bevorzugt sind die unmittelbar vorstehenden Merkmale a. und b., c. und d. sowie c. und e. und f. in Kombination realisiert. Besonders bevorzugt sind die unmittelbar vorstehenden Merkmale a. bis f. in Kombination realisiert

In Folge der Verschweißung im Bereich der Sicke finden sich in dieser bevorzugt ein oder mehrere Schweißnähte. Die sternförmig angeordneten Sicken und die sternförmig angeordneten linearen Teilabschnitte der Nut schließen jeweils bevorzugt einen Winkel von 120° ein.

Es hat sich in einigen Ausführungsformen als vorteilhaft erwiesen, auch den Rand des Stromkollektors, der auf der Innenseite des Gehäusebodens aufsitzt, einer Vorbehandlung zu unterziehen, damit der Kontakt zwischen dem Gehäuseboden und dem Stromkollektor verbessert wird. Insbesondere kann in den Rand mindestens eine Vertiefung eingefalzt werden, die zu der mindestens einen Sicke bzw. der länglichen Erhöhung auf der der ersten endständigen Stirnseite zugewandten Flachseite des Kontaktblechs korrespondiert.

Der Rand des Stromkollektors kann auch durch eine Vorbehandlung einer gerichteten Umformung unterzogen worden sein. Beispielsweise kann er in eine definierte Richtung umgebogen sein.

In einigen Ausführungsformen ist der Boden des becherförmigen Gehäuseteils eingeschweißt, wurde also separat gefertigt und mit der Seitenwand durch Verschweißung verbunden. In den meisten Fällen ist das becherförmige Gehäuseteil allerdings durch Tiefziehen gefertigt.

### Prismatische Ausführungsform

Bevorzugt ist das erfindungsgemäße Energiespeicherelement als zylindrische Rundzelle oder als Knopfzelle ausgebildet. In einigen bevorzugten Ausführungsformen kann es aber auch prismatisch ausgebildet sein.

Im letzteren Fall ist das Gehäuse prismatisch ausgebildet. Der Boden des becherförmigen Gehäuseteils und das Deckelbauteil weisen in dieser Ausführungsform bevorzugt eine polygonale, besonders bevorzugt eine rechteckige Grundfläche, auf. Die Form der endständigen Öffnung des becherförmigen Gehäuseteils entspricht der Form des Bodens und des Deckelbauteils. Darüber hinaus umfasst das Gehäuse mehrere, bevorzugt vier, rechteckige Seitenteile, die den Boden und das Deckelbauteil miteinander verbinden.

Der Elektroden-Separator-Verbund ist in dieser Ausführungsform bevorzugt ebenfalls prismatisch ausgebildet. Bei dem Elektroden-Separator-Verbund handelt es sich in diesem Fall bevorzugt um einen prismatischen Stapel aus mehreren Anoden, Kathoden und mindestens einem Separator, wobei der Elektroden-Separator-Verbund innerhalb des Stapels stets die Sequenz Anode / Separator / Kathode aufweist.

Zumindest die Anoden und Kathoden weisen bevorzugt eine rechteckige Grundfläche auf, wobei die Stromkollektoren der Anoden und der Kathoden jeweils den ersten und den dazu parallelen zweiten Rand aufweisen und jeweils entlang ihres ersten Randes den freien Randstreifen aufweisen, der nicht mit dem jeweiligen Elektrodenmaterial beschichtet ist.

Im Falle mehrerer Separatoren zwischen den Anoden und Kathoden weisen die Separatoren bevorzugt ebenfalls eine rechteckige Grundfläche auf. Es ist jedoch auch möglich, dass ein bandförmiger Separator zum Einsatz kommt, der mehrere Anoden und Kathoden innerhalb des Stapels voneinander trennt.

Bei der ersten und der zweiten flachen endständigen Stirnseite des Stapels handelt es sich beispielsweise um zwei gegenüberliegende oder benachbarte Seiten des Stapels. Aus einer dieser Stirnseiten treten die ersten Ränder der Anodenstromkollektoren hervor, aus der anderen die ersten Ränder der Kathodenstromkollektoren. Das Kontaktblech sitzt auf den ersten Rändern der Anodenstromkollektoren auf und ist mit diesen durch Verschweißung verbunden.

### Ausführungsform als zylindrische Rundzelle oder als Knopfzelle

In Ausführungsformen des erfindungsgemäßen Energiespeicherelements als zylindrische Rundzelle oder als Knopfzelle zeichnet es sich bevorzugt durch mindestens eines der unmittelbar folgenden Merkmale a. bis p. aus:
a. Die endständige Öffnung des becherförmig ausgebildeten Gehäuseteils ist kreisförmig ausgebildet und die umlaufende Seitenwand des becherförmig ausgebildeten Gehäuseteils umfasst oder bildet einen zylindrischen Gehäusemantel.
b. Das Deckelbauteil, das die kreisförmige Öffnung des becherförmig ausgebildeten Gehäuseteils verschließt, weist einen kreisförmigen Umfang auf.
c. Der Elektroden-Separator-Verbund liegt in Form eines zylindrischen Wickels vor, der neben der ersten und der zweiten flachen endständigen Stirnseite einen zwischen den Stirnseiten liegenden Wickelmantel aufweist.
d. In dem Gehäuse ist der Elektroden-Separator-Verbund axial ausgerichtet, so dass der Wickelmantel an der Innenseite des zylindrischen Gehäusemantels anliegt.
e. Die Anode und der Anodenstromkollektor sind bandförmig ausgebildet, wobei der Anodenstromkollektor einen ersten Längsrand und einen zweiten Längsrand und zwei Endstücke umfasst.
f. Bei dem ersten und dem dazu parallelen zweiten Rand des Anodenstromkollektors handelt es sich um die Längsränder des bandförmigen Anodenstromkollektors.
g. Der mit einer Schicht aus negativem Elektrodenmaterial beladene Hauptbereich des Anodenstromkollektors ist bandförmig ausgebildet.
h. Der freie Randstreifen erstreckt sich entlang des ersten Längsrands des Anodenstromkollektors.
i. Die Kathode und der Kathodenstromkollektor sind bandförmig ausgebildet, wobei der Kathodenstromkollektor einen ersten Längsrand und einen zweiten Längsrand und zwei Endstücke umfasst.
j. Bei dem ersten und dem dazu parallelen zweiten Rand des Kathodenstromkollektors handelt es sich um die Längsränder des bandförmigen Kathodenstromkollektors.
k. Der mit einer Schicht aus positivem Elektrodenmaterial beladene Hauptbereich des Kathodenstromkollektors ist bandförmig ausgebildet.
l. Der freie Randstreifen erstreckt sich entlang des ersten Längsrands des Kathodenstromkollektors.
m. Der Separator oder die Separatoren des Elektroden-Separator-Verbunds sind bandförmig ausgebildet.
n. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.
o. Das Kontaktblech sitzt auf dem ersten Längsrand des Anodenstromkollektors oder auf dem ersten Rand des Kathodenstromkollektors auf und ist mit diesem durch Verschweißung verbunden.
p. Der nicht mit dem Kontaktblech in unmittelbarem Kontakt stehende erste Längsrand des Anodenstromkollektors oder des Kathodenstromkollektors ist elektrisch mit dem Gehäuseboden verbunden.

Besonders bevorzugt zeichnet sich das erfindungsgemäße Energiespeicherelement durch eine Kombination aller unmittelbar vorstehenden Merkmale a. bis p. aus.

Der Elektroden-Separator-Verbund umfasst in dieser Ausführungsform bevorzugt einen bandförmigen Separator oder zwei bandförmige Separatoren, der oder die jeweils einen ersten und einen zweiten Längsrand sowie zwei Endstücke aufweisen. Der Elektroden-Separator-Verbund umfasst die Elektroden und den oder den Separator stets mit der Sequenz Anode / Separator / Kathode.

Bevorzugt ist das Deckelbauteil mit dem kreisförmigen Umfang in dieser Ausführungsform derart in der kreisförmigen Öffnung des becherförmig ausgebildeten Gehäuseteils angeordnet, dass sein Rand entlang einer umlaufenden Kontaktzone an der Innenseite des becherförmig ausgebildeten Gehäuseteils anliegt, wobei der Rand des Deckelbauteils mit dem becherförmig ausgebildeten Gehäuseteil über eine umlaufende Schweißnaht verbunden ist.

Bevorzugt liegt die Höhe als zylindrische Rundzelle ausgebildeter erfindungsgemäßer Energiespeicherelemente im Bereich von 50 mm bis 150 mm. Der Durchmesser der zylindrischen Rundzellen liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Wenn das erfindungsgemäße Energiespeicherelement als Knopfzelle ausgebildet ist, weist es bevorzugt einen Durchmesser von bis zu 25 mm und eine Höhe von bis zu 15 mm auf.

Der Anodenstromkollektor, der Kathodenstromkollektor und der Separator oder die Separatoren weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf. Besonders bevorzugt weist der Anodenstromkollektor einen freien Randstreifen auf, der eine Breite im Bereich von 1000 bis 2000 µm, besonders bevorzugt von ca. 1500 µm, aufweist. Besonders bevorzugt weist der Kathodenstromkollektor einen freien Randstreifen auf, der eine Breite im Bereich von 2000 bis 4000 µm, besonders bevorzugt von ca. 3000 µm, aufweist.

### Bevorzugte Ausführungsformen des Separators

Bevorzugt werden der Separator oder die Separatoren aus elektrisch isolierenden Kunststofffolien gebildet. Es ist bevorzugt, dass die Separatoren von dem Elektrolyten durchdrungen werden können. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen besonders bevorzugten Ausführungsformen werden Separatoren verwendet, die mit keramischen Partikeln (z.B. Al₂O₃ oder SiO₂) ein- oder beidseitig beschichtet oder imprägniert sind.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

### Bevorzugte Struktur eines als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden vorzugsweise die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte elektrochemische Ausführungsform

In einer weiteren besonders bevorzugten Ausführungsform der Erfindung zeichnet sich das erfindungsgemäße Energiespeicherelement durch eines der unmittelbar folgenden Merkmale a. und b. aus:
a. Das Energiespeicherelement ist eine Lithium-Ionen-Zelle.
b. Das Energiespeicherelement umfasst eine Lithium-Ionen-Zelle.

Merkmal a. bezieht sich insbesondere auf die beschriebene Ausführungsform des erfindungsgemäßen Energiespeicherelements als zylindrische Rundzelle oder Knopfzelle. In dieser Ausführungsform umfasst oder ist das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.4}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 15000 mAh. Mit dem Formfaktor von 21 x 70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen der Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

In einigen bevorzugten Ausführungsformen können die Folien perforiert sein.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Im Fall der beschriebenen Konfiguration des Energiespeicherelements als zylindrische Rundzelle ist es bevorzugt, dass die Längsränder des oder der Separatoren die Stirnseiten des als Wickel ausgebildeten Elektroden-Separator-Verbunds bilden.

Im Fall der beschriebenen prismatischen Konfiguration des Energiespeicherelements ist es bevorzugt, dass die Ränder des oder der Separatoren die Stirnseiten des Stapels bilden, aus denen die Ränder der Stromkollektoren hervortreten.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

### Bevorzugte Ausgestaltung der Gehäuseteile

In einer weiteren besonders bevorzugten Ausführungsform der Erfindung zeichnet sich das erfindungsgemäße Energiespeicherelement durch mindestens eines der unmittelbar folgenden Merkmale a. bis c. aus:
a. Der Boden des becherförmig ausgebildeten Gehäuseteils weist eine Dicke im Bereich von 200 µm bis 2000 µm auf.
b. Die Seitenwand des becherförmig ausgebildeten Gehäuseteils weist eine Dicke im Bereich von 150 µm bis 2000 µm auf.
c. Das Deckelbauteil, insbesondere die Deckelplatte des Deckelbauteils, weist eine Dicke im Bereich von 200 µm bis 2000 µm auf.

Besonders bevorzugt sind die unmittelbar vorstehenden Merkmale a. bis c. in Kombination realisiert.

### Erfindungsgemäßes Verfahren

Das erfindungsgemäße Verfahren dient zur Herstellung des erfindungsgemäßen Energiespeicherelements und zeichnet sich durch die folgenden Schritte a. bis e. aus:
a. Bereitstellung eines metallischen, becherförmig ausgebildeten Gehäuseteils, das einen Gehäuseboden, eine umlaufende Seitenwand und eine endständige Öffnung umfasst,
b. Bereitstellung eines Elektroden-Separator-Verbunds der
   - eine Kathode mit einem Kathodenstromkollektor, der einen ersten Rand und einen dazu parallelen zweiten Rand aufweist,
   - eine Anode mit einem Anodenstromkollektor, der einen ersten Rand und einen dazu parallelen zweiten Rand aufweist, sowie
   - eine erste flache endständige Stirnseite (und eine zweite flache endständige Stirnseite
      wobei,
   - der Anodenstromkollektor einen Hauptbereich, der mit einer Schicht aus negativem Elektrodenmaterial beladen ist, sowie einen freien Randstreifen, der sich entlang seines ersten Rands erstreckt und der nicht mit dem Elektrodenmaterial beladen ist, umfasst,
      wobei
   - der Kathodenstromkollektor einen Hauptbereich, der mit einer Schicht aus positivem Elektrodenmaterial beladen ist, sowie einen freien Randstreifen, der sich entlang seines ersten Rands erstreckt und der nicht mit dem Elektrodenmaterial beladen ist, umfasst,
      wobei
   - die Anode und die Kathode innerhalb des Elektroden-Separator-Verbunds derart angeordnet sind, dass der erste Rand des Anodenstromkollektors aus der ersten endständigen Stirnseite und der erste Rand des Kathodenstromkollektors aus der zweiten endständigen Stirnseite des Elektroden-Separator-Verbunds austritt,
c. Einschieben des Elektroden-Separator-Verbunds in den Gehäusebecher, so dass der erste Rand des Anodenstromkollektors oder der erste Rand des Kathodenstromkollektors auf dem Gehäuseboden aufsitzt.
d. In die endständige Öffnung des becherförmig ausgebildeten Gehäuseteils (101) wird eine Deckelplatte (102a) eingesetzt, die eine Durchbrechung für den Anschlusspol (102b) aufweist.
e. Ein zwischen der Deckelplatte (102a) und dem Kontaktblech (111) verbleibender Spalt wird mit einer Vergussmasse (113) gefüllt, die in ausgehärtetem Zustand die Deckelplatte (102a) von dem Anschlusspol (102b) und von dem Kontaktblech (111) elektrisch isoliert.

Die im Rahmen des Verfahrens verwendeten Komponenten sind sämtlich im Zusammenhang mit dem erfindungsgemäßen Energiespeicherelement beschrieben worden. Auf die entsprechenden Ausführungen wird hiermit verwiesen.

Mit den Schritten d. und e. wird das Gehäuse des Energiespeicherelements gebildet und gleichzeitig an seiner Oberseite abgedichtet. Es ist bevorzugt, dass vor Schritt e. eine Verschweißung der Deckelplatte mit dem becherförmig ausgebildeten Gehäuseteil erfolgt. Diese Maßnahme gewährleistet in Kombination mit der Anwendung der Vergussmasse in Schritt e. den flüssigkeits- und gasdichten Verschluss des Gehäuses.

Wie oben bereits ausgeführt ist es bevorzugt, dass entweder der erste Rand des Anodenstromkollektors oder der erste Rand des Kathodenstromkollektors unmittelbar auf dem Gehäuseboden aufsitzt. Weiterhin ist es bevorzugt, dass der auf dem Gehäuseboden aufsitzende Rand durch Verschweißung mit dem Gehäuseboden verbunden wird.

Das Herstellen der Schweißverbindung zwischen dem auf dem Gehäuseboden aufsitzenden ersten Rand und dem Gehäuseboden, erfolgt bevorzugt durch Schweißen, insbesondere Laserschweißen, von außen.

In bevorzugten Ausführungsformen umfasst das Verfahren mindestens einen der unmittelbar folgenden Schritte a. und b.:
a. Ein Kontaktblech wird auf dem ersten Rand des Anodenstromkollektors oder dem ersten Rand des Kathodenstromkollektors, der nicht auf dem Gehäuseboden aufsitzt, positioniert, und durch Verschweißung mit diesem Rand verbunden.
b. Ein Anschlusspol wird auf dem Kontaktblech fixiert.

Bevorzugt umfasst das erfindungsgemäße Verfahren beide Schritte a. und b..

Sowohl Schritt a. als auch Schritt b. können vor oder nach dem Einschieben des Elektroden-Separator-Verbunds in den Gehäusebecher vorgenommen werden. Das Fixieren des Anschlusspols auf dem Kontaktblech erfolgt gleichfalls mittels Verschweißung.

In besonders bevorzugten Ausführungsformen wird vor dem Einsetzen der Deckelplatte die bereits oben erwähnte O-Ring-förmige Isolierscheibe aus einem elektrisch isolierenden Kunststoffmaterial auf das Kontaktblech aufgelegt. Sie begrenzt den mit Vergussmasse zu befüllenden Spalt radial nach außen hin.

Über die Durchbrechung im Gehäuseboden des metallischen, becherförmig ausgebildeten Gehäuseteils kann der Elektroden-Separator-Verbund mit einem geeigneten Elektrolyten getränkt werden. Mittels der metallischen Membran kann die Durchbrechung anschließend verschlossen werden.

In bevorzugten Ausführungsformen umfasst das Verfahren den unmittelbar folgenden Schritt a.:
a. In den Gehäuseboden des becherförmig ausgebildeten Gehäuseteils werden
   - eine Primärsicherung gegen internen Überdruck in Form einer Durchbrechung, die mittels einer metallischen Membran verschlossen ist, und
   - eine Sekundärsicherung gegen internen Überdruck in Form mindestens einer Nut auf seiner Innenseite oder seiner Außenseite
   integriert.

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### KURZBESCHREIBUNG DER ZEICHNUNGEN

In den Zeichnungen zeigen schematisch:
- Fig. 1: schematische Darstellung der Elektrodenbänder und deren Anordnung zur Illustrierung des Aufbaus eines Elektroden-Separator-Verbunds einer erfindungsgemäßen Energiespeicherzelle;
- Fig. 2A-C: Darstellungen einer Ausführungsform einer erfindungsgemäßen Energiespeicherzelle von außen und in einem Längsschnitt;
- Fig. 3A,B: Detaildarstellungen des oberen und des unteren stirnseitigen Bereichs einer Ausführungsform einer erfindungsgemäßen Energiespeicherzelle in einem Längsschnitt;
- Fig.4A,B: Detaildarstellungen eines Anschlusspols für eine bevorzugte Ausführungsform einer erfindungsgemäßen Energiespeicherzelle in einer Ansicht schräg von oben und in einer Schnittansicht;
- Fig. 5A,B: Detaildarstellungen einer Isolierscheibe für eine bevorzugte Ausführungsform einer erfindungsgemäßen Energiespeicherzelle in einer Ansicht schräg von oben und in einer Schnittansicht;
- Fig. 6A,B: Detaildarstellungen eines Kontaktblechs für eine bevorzugte Ausführungsform einer erfindungsgemäßen Energiespeicherzelle in einer Ansicht schräg von oben und in einer Schnittansicht schräg von unten;
- Fig. 7: Detaildarstellung des Gehäusebodens einer bevorzugten Ausführungsform einer erfindungsgemäßen Energiespeicherzelle;
- Fig. 8A-C: Darstellungen der verschiedenen Komponenten einer bevorzugten Ausführungsform einer erfindungsgemäßen Energiespeicherzelle in Explosionsansichten;
- Fig. 9A,B: Detaildarstellungen aus dem oberen stirnseitigen Bereich einer bevorzugten Ausführungsform einer erfindungsgemäßen Energiespeicherzelle zur Illustrierung eines Herstellungsverfahrens für die Energiespeicherzelle;
- Fig. 10: Darstellung einer bevorzugten Ausführungsform einer erfindungsgemäßen Energiespeicherzelle schräg von oben auf den Gehäuseboden zur Illustrierung eines Herstellungsverfahrens für die Energiespeicherzelle; und
- Fig. 11A,B: Alternative Ausführungsform eines Kontaktblechs mit daran angefügtem Anschlusspol und deren Einbau in eine bevorzugte Ausführungsform einer erfindungsgemäßen Energiespeicherzelle in Schnittansichten.

### BESCHREIBUNG BEVORZUGTER AUSFÜHRUNGSBEISPIELE

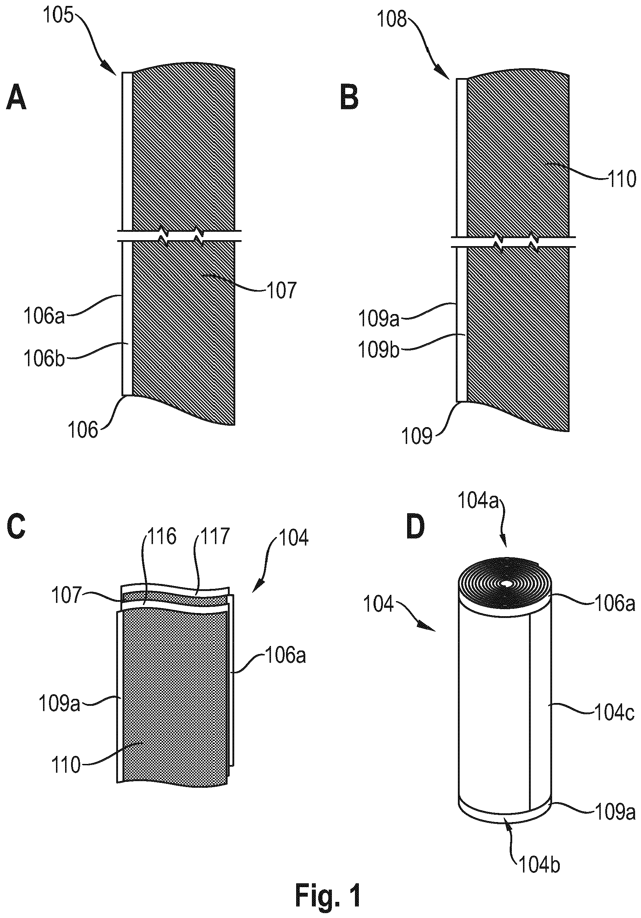

Der in Fig. 1A-D illustrierte Elektroden-Separator-Verbund umfasst die bandförmige Anode 105 (Fig. 1A) mit dem bandförmigen Anodenstromkollektor 106, der einen ersten Längsrand 106a und einen dazu parallelen zweiten Längsrand aufweist. Bei dem Anodenstromkollektor 106 handelt es sich vorzugsweise um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Elektroden-Separator-Verbund die bandförmige Kathode 108 (Fig. 1B) mit dem bandförmigen Kathodenstromkollektor 109, der einen ersten Längsrand 109a und einen dazu parallelen zweiten Längsrand aufweist. Bei dem Kathodenstromkollektor 109 handelt es sich vorzugsweise um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind in Fig. 1A und B einzeln in ungewickeltem Zustand dargestellt.

Die Anode 105 und die Kathode 108 sind innerhalb des Elektroden-Separator-Verbunds versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus Fig. 1C hervor. Dort sind auch die zwei bandförmigen Separatoren 116 und 117 dargestellt, die im Wickel die Elektroden 105 und 108 voneinander trennen. In Fig. 1D ist der Elektroden-Separator-Verbund in gewickelter Form dargestellt, wie er in einem erfindungsgemäßen Energiespeicherelement zum Einsatz kommen kann. Die aus den Stirnseiten 104a, 104b austretenden Elektrodenränder 106a, 109a sind gut zu erkennen. Der äußere Wickelmantel 104c wird durch eine Kunststofffolie gebildet.

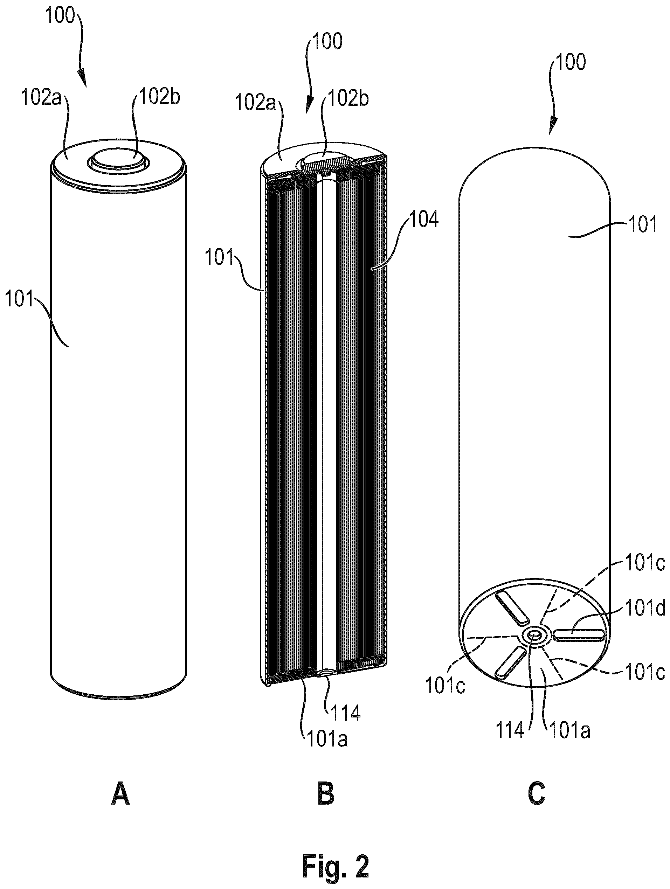

Fig. 2A-C zeigt eine bevorzugte Ausführungsform einer erfindungsgemäße Energiespeicherzelle in einer Ansicht schräg von oben (Fig. 2A), in einem Längsschnitt (Fig. 2B) und in einer Ansicht schräg von unten (Fig. 2C). Die Energiespeicherzelle 100 hat die Form einer zylindrischen Rundzelle. Das Gehäuse der Energiespeicherzelle 100 wird von einem becherförmig gebildeten Gehäuseteil 101 und einem Deckelbauteil gebildet. Das Deckelbauteil umfasst dabei eine Deckelplatte 102a, die die Form einer Lochplatte hat, sowie einen Anschlusspol 102b im Zentrum des Deckelbauteils.

Wie in der Schnittdarstellung in Fig. 2B zu erkennen ist, befindet sich im Inneren der Energiespeicherzelle 100 der wickelförmige Elektroden-Separator-Verbund 104, der aus den gewickelten Elektrodenbändern mit dazwischenliegenden Separatorenbändern gebildet ist.

In Fig. 2C ist die Unterseite der Energiespeicherzelle 100 gezeigt, die von dem Gehäuseboden 101a gebildet ist. In dem Gehäuseboden 101a sind drei sternförmig angeordnete Schweißprägungen in Form von Sicken 101d angeordnet, die nach außen als Vertiefung und nach innen als längliche Erhöhung zutage treten. Auf diesen Sicken 101d sitzt innen der Längsrand des jeweiligen Stromkollektors auf und im Bereich dieser Sicken ist der Stromkollektor mit dem Gehäuseboden vorzugsweise unmittelbar verschweißt.

Als Material für den Gehäuseboden 101a und das gesamte becherförmige Gehäuseteil 101 dient in bevorzugter Weise Aluminium.

Im vorliegenden Beispiel sind in den Gehäuseboden 101a zwei Sicherungsfunktionen integriert. Zum einen befindet sich im Zentrum des Gehäusebodens 101a eine Durchbrechung, die mit einer metallischen Membran 114 verschlossen ist. Im Fall eines auftretenden Überdrucks durch eine Fehlfunktion der Zelle wird mittels dieser Membran 114 ein Druckausgleich herbeigeführt, indem die Membran in diesem Fall durch den Druck entweder aufgesprengt oder abgesprengt wird. Auf diese Weise kann ein im Inneren der Zelle sich gegebenenfalls gebildetes Gas durch die Durchbrechung im Gehäuseboden 101a entweichen (Primärsicherung).

Darüber hinaus ist im Gehäuseboden 101a eine weitere Sicherungsfunktion vorgesehen, die durch drei sternförmig angeordnete Nuten 101c realisiert ist. Diese Nuten 101c stellen Schwächungen der Struktur des Gehäusebodens 101a dar und bilden damit Sollbruchstellen im Fall eines auftretenden Überdrucks im Inneren der Zelle (Sekundärsicherung). In diesem Ausführungsbeispiel befinden sich die Nuten auf der inneren Seite des Gehäusebodens 101a und sind daher in Fig. 2C als gestrichelte Linien dargestellt. Die Nuten 101c können insbesondere als drei Ritzlinien realisiert sein. Die sternförmige Anordnung der Ritzlinien ist darüber hinaus durch eine teilkreisförmige Verbindung der Ritzlinien bzw. der Nuten 101c weiter ausgebildet. Bei einem entsprechend hohen Überdruck reißt der Gehäuseboden 101a entlang der Nuten 101c und der teilkreisförmigen Verbindung dieser Nuten auf, so dass eine Austrittsöffnung mit vergleichsweise großem Querschnitt entsteht, über den gegebenenfalls im Gehäuseinneren gebildetes Gas schnell entweichen kann.

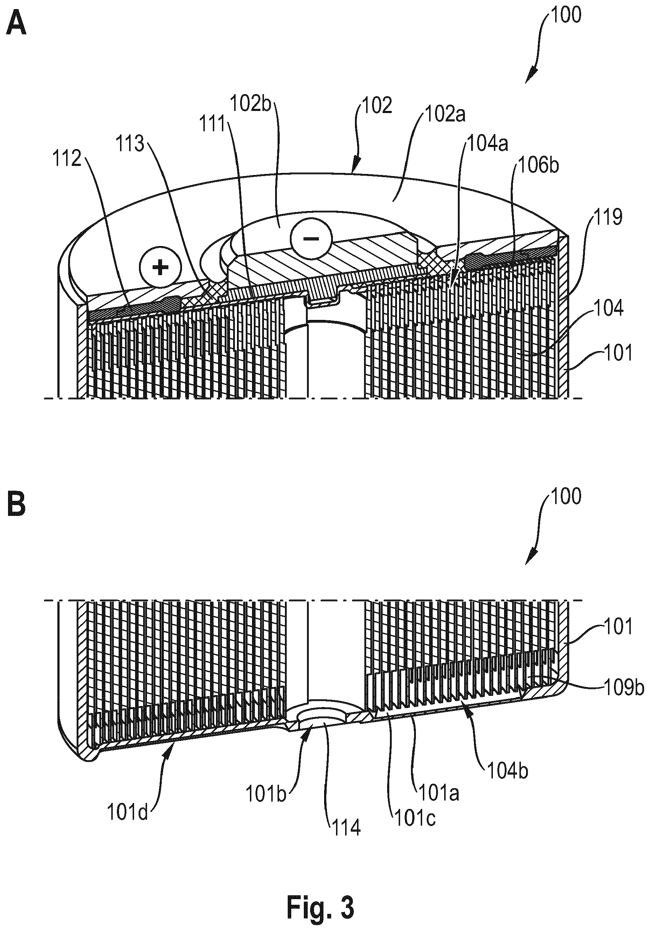

**Fig. 3A****,B** zeigt eine vergrößerte Darstellung der stirnseitigen Bereiche der Energiespeicherzelle 100. Aus Fig. 3A gehen Details der Stirnseite mit dem Deckelbauteil 102 hervor. Das Deckelbauteil 102 umfasst die Deckelplatte 102a mit einer zentralen Durchbrechung und mit dem im Zentrum der Deckelplatte 102a angeordneten Anschlusspol 102b. In diesem Ausführungsbeispiel bildet der Anschlusspol 102b den negativen Pol und die umgebende Deckelplatte 102a den positiven Pol der Energiespeicherzelle 100.

Unterhalb des Anschlusspols 102b befindet sich das Kontaktblech 111, das auf dem freien Randstreifen 106b des spiralförmig angeordneten Anodenstromkollektors der negativen Elektrode aufsitzt und hieran angeschweißt ist. Das Kontaktblech 111 ist mit dem aus zwei metallischen Komponenten gebildeten Anschlusspol 102b elektrisch verbunden, insbesondere auch durch Verschweißung. Gegenüber dem Kontaktblech 111 ist die Deckelplatte 102a durch eine O-Ring-förmige Isolierscheibe 112 elektrisch isoliert. Weiterhin befindet sich in einem Spalt zwischen dem Anschlusspol 102b und der Deckelplatte 102a eine elektrische isolierende Vergussmasse 113.

Fig. 3B zeigt Details der gegenüberliegenden Stirnseite der Energiespeicherzelle 100, die von dem Gehäuseboden 101a umfasst wird. Der freie Randstreifen 109b des Kathodenstromkollektors ist auf dieser Stirnseite der Energiespeicherzelle 100 unmittelbar mit dem Gehäuseboden 101a elektrisch verbunden, insbesondere verschweißt. Über den Mantel des becherförmigen Gehäuseteils 101 besteht der elektrische Kontakt mit der metallischen Deckelplatte 102a auf der gegenüberliegenden Stirnseite, so dass das positive Potential der Zelle ebenfalls auf der oberen Stirnseite der Energiespeicherzelle 100 abgreifbar ist.

An der in Fig. 3B dargestellten unteren Stirnseite der Energiespeicherzelle 100 sind die erfindungsgemäß bevorzugten Sicherungsfunktionen der Zelle gegen Überdruck zu erkennen. Die Primärsicherung wird von der metallischen Membran 114 gebildet, die eine zentrale kreisförmige Durchbrechung 101b im Gehäuseboden 101a verschließt. Die Sekundärsicherung wird von den Nuten 101c gebildet, wobei in dieser Darstellung eine der drei sternförmige angeordneten Nuten 101c im Schnitt erkennbar ist. Die Nuten 101c, die sich auf der Innenseite des Gehäusebodens 101a befinden, stellen eine definierte Schwächungsstruktur des Gehäusebodens dar, so dass bei einem relativ hohen, im Inneren der Zelle entstehenden Überdruck diese Strukturen sich öffnen und Gas entweichen kann.

Das anhand der Fig. 3 illustrierte bevorzugte Design der erfindungsgemäßen Energiespeicherzelle 100 erlaubt eine reduzierte Anzahl der Teile im oberen Bereich der Energiespeicherzelle (Fig. 3A), wobei in diesem oberen Bereich der negative und der positive Anschluss der Zelle angeordnet sind. Insbesondere kann durch dieses Design auf zusätzliche Ableiter durch die einteilige Ausfertigung des Anschlusspols 102b verzichtet werden.

Auch die direkte Kontaktierung des Längsrands eines der Elektrodenbänder auf der Seite des Gehäusebodens (Teilfigur 3B) dient der besonders kompakten Bauweise der Zelle, so dass keine Totvolumina für die verschiedenen Funktionen der Zelle erforderlich sind.

Durch die direkte Kontaktierung der Längsränder der Elektrodenbänder werden darüber hinaus eine verbesserte Wärmeabfuhr und eine Reduzierung des Innenwiderstands erreicht.

Zudem erlaubt das Design dieser Zelle im Allgemeinen auch eine Ausbildung von längeren Wickeln und damit eine größere Energiedichte der resultierenden Energiespeicherzelle.

Die obere Stirnseite der Energiespeicherzelle 100 ist in dieser Ausgestaltung maximal kompakt ausgebildet. Bei im Inneren der Zelle gegebenenfalls entstehenden Gasen, die zu einem Druckanstieg führen, werden diese Gase zwangsläufig in den unteren Bereich der Zelle geleitet, in welchem die Sicherungsfunktionen für einen Druckausgleich angeordnet sind. Insgesamt weist eine solche Zelle daher ein sehr gutes Sicherheitsniveau auf.

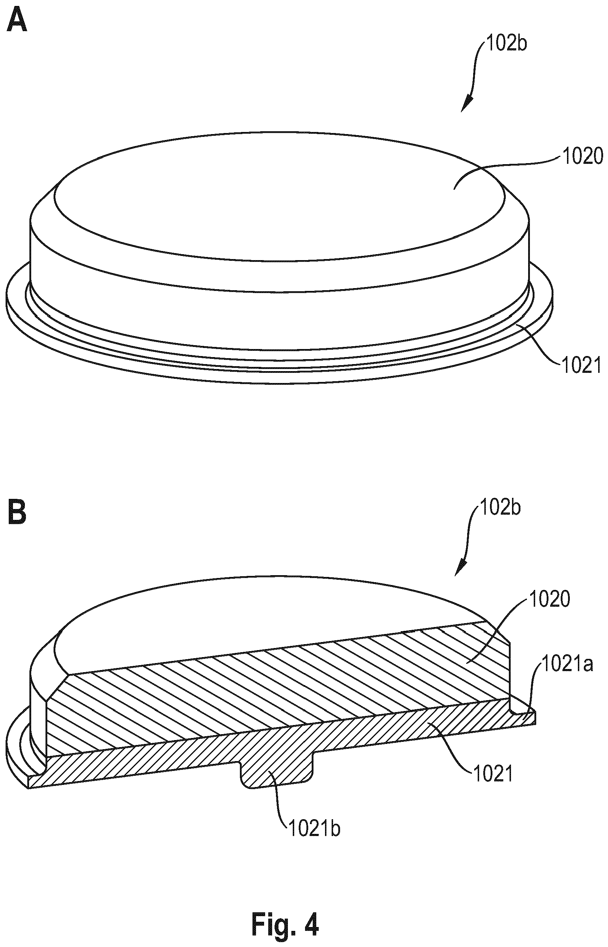

**Fig. 4A****,B** zeigt eine Detaildarstellung des Anschlusspols 102b in einer Ansicht schräg von oben (Fig. 4A) und in einer Schnittdarstellung (Fig. 4B). Der Anschlusspol 102b ist in dieser bevorzugten Ausführungsform aus zwei metallischen Komponenten zusammengesetzt. Der obere Bereich (Poloberteil) 1020 wird vorzugsweise von Aluminium und der untere Bereich (Polunterteil) 1021 vorzugsweise von Kupfer gebildet. Der obere Bereich 1020 weist eine abgeschrägte, umlaufende obere Kante auf. Wie in der Schnittdarstellung gemäß Fig. 4B zu erkennen ist, ist bei dem unteren Bereich 1021 eine außen umlaufende Schweißschulter 1021a und ein zentraler, nach unten abragender Stift 1021b vorgesehen. Der Stift 1021b greift zweckmäßigerweise in eine entsprechend vorgesehene Vertiefung im Zentrum des Kontaktblechs 111 ein und sorgt damit für eine gute Passung des Anschlusspols 102b.

Ein solcher Anschlusspol 102b kann beispielsweise aus einer Bi-Metall-Bandware mit Aluminium und Kupfer gebildet werden. Beispielsweise wird hierfür eine Ronde aus dem Bi-Metall ausgestanzt. Der obere Bereich 1020 mit der abgeschrägten Kante und der untere Bereich 1021 mit dem zentralen Stift 2021b und der umlaufenden Schweißschulter 1021a kann durch Kaltumformen gebildet werden.

Kupfer eignet sich für den unteren Bereich 1021 des Anschlusspols 102b in besonderer Weise insbesondere für solche Fälle, in denen der Anschlusspol 102b für die Kontaktierung eines Anodenstromkollektors über das Kontaktblech 111 vorgesehen ist. Auch der Anodenstromkollektor besteht üblicherweise aus Kupfer, so dass sich dieses Material auch für den Anschlusspol besonders eignet. In diesem Fall besteht auch das Kontaktblech 111 vorzugsweise aus Kupfer.

Die Ausbildung des oberen Teils 1020 des Anschlusspols 102b aus Aluminium hat den besonderen Vorteil, dass in diesem Fall das gesamte Gehäuse der Energiespeicherzelle aus Aluminium gebildet sein kann, da in der Regel auch das becherförmige Gehäuseteil 101 aus Aluminium besteht. Auch der Kathodenstromkollektor, der gegebenenfalls mit dem der Gehäuseboden 101a elektrisch kontaktiert ist, besteht oftmals aus Aluminium. Wenn die Energiespeicherzelle 100 gegebenenfalls mit umgedrehter Polarität aufgebaut ist, ist es selbstverständlich auch möglich, dass die metallischen Materialien für das Gehäuse und/oder den Anschlusspol anders gewählt werden.

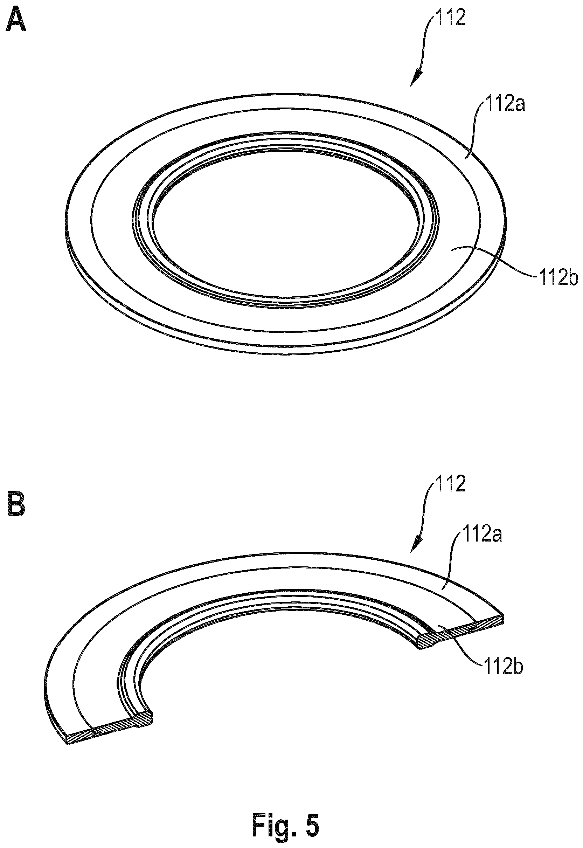

**Fig. 5A****,B** zeigt die O-Ring-förmigen Isolierscheibe 112 in einer kompletten Ansicht schräg von oben (Fig. 5A) und in einer geschnittenen Ansicht (Fig. 5B). Die Isolierscheibe 112 hat zum einen die Funktion einer elektrischen Isolierung der vorzugsweise positiv gepolten Deckelplatte 102a gegenüber den Komponenten der Energiespeicherzelle 100 mit negativer Polarität. Darüber hinaus wird durch die Isolierscheibe 112 auch ein flüssigkeitsdichter und luftdichter Verschluss des Gehäuses erreicht.

In dem hier gezeigten bevorzugten Ausführungsbeispiel der Isolierscheibe 112 ist die Isolierscheibe aus zwei unterschiedlichen Materialien gefertigt. Der äußere Bereich 112a der Isolierscheibe 112 ist vorzugsweise aus einem besonders festen Kunststoffmaterial, beispielsweise aus PBT (Polybutylenterephthalat) gebildet. Der innere Bereich 112b ist vorzugsweise aus einem etwas flexibleren und vor allem aus einem besonders wärmebeständigen Kunststoff gebildet, beispielsweise aus PET (Polyethylenterephthalat). Der äußere Bereich 112a sorgt damit für eine besondere mechanische Stabilität. Der Innere Bereich 112b sorgt für Flexibilität und ist dabei besonders beständig gegenüber der heiß einzubringenden Vergussmasse 13 bei der Montage der Energiespeicherzelle.

Mit besonderem Vorteil weist der Innenumfang der O-Ring-förmigen Isolierscheibe 112 eine umlaufende Verdickung auf, wodurch die Stabilität der Komponenten in dem stirnseitigen Bereich der montierten Energiespeicherzelle weiter unterstützt wird.

Bei der Montage der Energiespeicherzelle wird durch das Einsetzen der Isolierscheibe 112 im Deckelbereich der Zelle zunächst ein temporäres Abdichten der Zelle erreicht, bis die anschließend eingebrachte Vergussmasse 113 zum vollständigen Verschluss der Zelle ausgehärtet ist. Weiterhin erlaubt die Isolierscheibe 112 durch ihre spezielle Form ein axiales Stützen des wickelförmigen Elektroden-Separator-Verbunds 104, beispielsweise bei einem Testen der Zelle. Falls die Zelle seitlich deformiert wird, bietet die Form der Isolierscheibe 112 darüber hinaus Raum für eine gegebenenfalls eintretende Verformung des Kontaktblechs 111. Schließlich ist es durch die Form der Isolierscheibe 112 möglich, das Volumen der Vergussmasse 113 und die Menge an gegebenenfalls eingeschlossenen Luftblasen während des Vergusses bei der Montage der Energiespeicherzelle zu reduzieren.

Als mögliche Alternative zu einer solchen Isolierscheibe kann beispielsweise ein isolierender Dichtwulst, vergleichbar mit einer Silikonraupe, aufdosiert werden. Auch hierdurch kann ein dichter Abschluss gewährleistet werden. Die Isolierscheibe 112, insbesondere in der hier illustrierten Ausführungsform, bietet demgegenüber jedoch die verschiedenen genannten Vorteile.

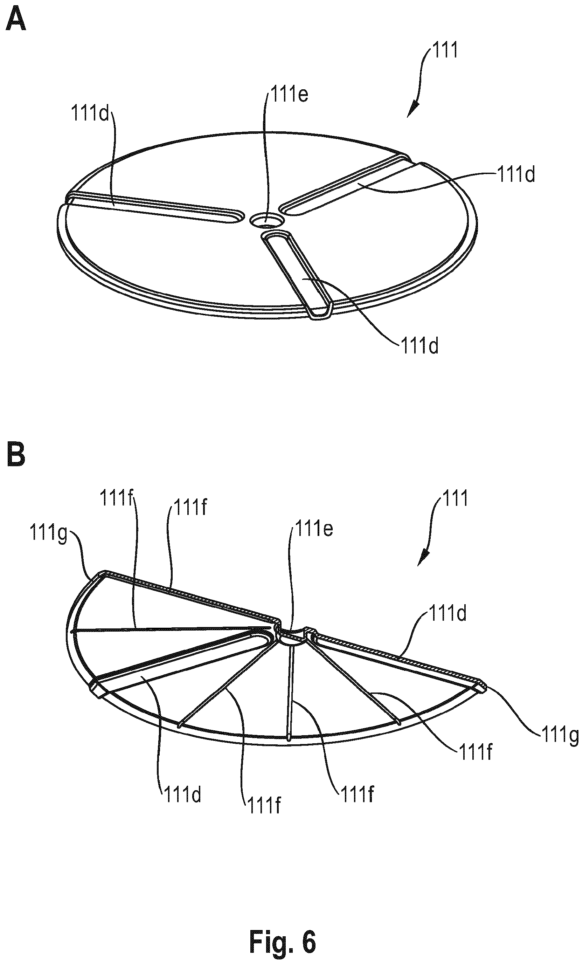

**Fig. 6A****,B** zeigt eine bevorzugte Ausführungsform des Kontaktblechs 111, das für die Kontaktierung des freien Rands des Stromkollektors der jeweiligen Elektrode im oberen Bereich der Energiespeicherzelle vorgesehen ist. Fig. 6A zeigt eine Aufsicht auf das scheibenförmige Kontaktblech 111. Fig. 6B zeigt einen Schnitt durch das Kontaktblech 111 in einer Ansicht von unten, also auf diejenige Seite des Kontaktblechs, die dem Elektroden-Separator-Verbund im Inneren der Energiespeicherzelle zugewandt ist.

Vergleichbar mit den Sicken 101d des Gehäusebodens 101a weist auch das Kontaktblech 111 drei sternförmig angeordnete Sicken 111d auf, die nach außen (Fig. 6A) als Vertiefung und nach innen (Fig. 6B) als längliche Erhöhung erscheinen. Die Sicken 111d können beispielsweise eingeprägt werden und weisen beispielsweise eine Tiefe von 0,25 mm auf. Die Sicken 111d stehen im montierten Zustand der Zelle in Kontakt mit dem jeweiligen Längsrand eines Elektrodenbands des hierüber zu kontaktierenden Elektroden-Separator-Verbunds. Das Kontaktblech 111 ist vorzugsweise über die Sicken 111d mit dem jeweiligen Längsrand des Elektrodenbands verschweißt.

In Zentrum des Kontaktblechs 111 befindet sich eine Vertiefung 111e. Die Vertiefung 111e dient zur Aufnahme des Anschlusspols 102b, indem der zentrale Stift 1021b des Anschlusspols 102b in die Vertiefung 111e eingreift. Auf diese Weise kann der Anschlusspol 102b in einfacher Weise auf dem Kontaktblech 111 positioniert und fixiert werden, so dass ein Anschweißen des Anschlusspols 102b ohne Probleme möglich ist.

Weiterhin sind in der hier gezeigten besonders bevorzugten Ausführungsform des Kontaktblechs 111 weitere sternförmige schmale Vertiefungen 111f vorgesehen, die sich auf der nach innen gerichteten Seite des Kontaktblechs 111 befinden. In diesem Ausführungsbeispiel sind insgesamt neun dieser Vertiefungen 111f als sternförmig angeordnete schmale Rinnen vorgesehen. Die Rinnen können beispielsweise eine Tiefe von 0,1 mm aufweisen. Die Vertiefungen 111f Rinnen dienen einer besseren Verteilung des Elektrolyten innerhalb der Zelle.

Weiterhin weist das Kontaktblech 111 in dieser bevorzugten Ausführungsform eine geprägte umlaufende Kante 111g auf, die als Soll-Knickstelle insbesondere mit dem Grat nach unten angeordnet ist. Diese Soll-Knickstelle erleichtert die Montage des Gehäuses der Energiespeicherzelle.

In bevorzugten Ausgestaltungen ist das Kontaktblech 111 aus Kupferblech gefertigt, beispielsweise aus einem Kupferblech mit einer Materialstärke von 0,3 mm. Kupfer ist insbesondere in solchen Fällen besonders vorteilhaft, in denen das Kontaktblech mit dem Längsrand des Anodenstromkollektors kontaktiert ist, der ebenfalls vorzugsweise aus Kupfer gebildet ist.

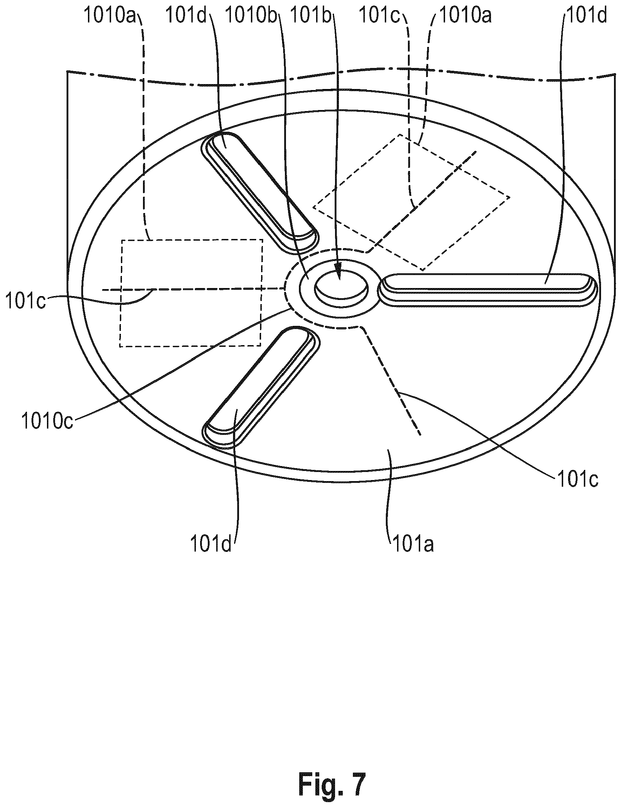

**Fig. 7** zeigt eine Detailansicht des Gehäusebodens 101a der Energiespeicherzelle mit den sternförmig angeordneten, nach innen vorstehenden Sicken 101d, die insbesondere als Schweißprägungen für die Kontaktierung des wickelförmigen Elektroden-Separator-Verbunds ausgebildet sind. Die sternförmige Anordnung mit drei Sicken 101d ist insbesondere durch ihre Drehsymmetrie für die Montage der Zelle besonders vorteilhaft.

Die zentrale Durchbrechung 101b im Gehäuseboden 101a ist von einer metallischen Membran 114 abgedeckt und dient als Primärsicherung für die Zelle bei einem auftretenden Überdruck. Dabei ist es insbesondere vorgesehen, dass die Durchbrechung 101b bei der Fertigung der Zelle zunächst für die Befüllung der Zelle mit Elektrolyt genutzt wird, bevor die Durchbrechung 101b mit der metallischen Membran 114 verschlossen wird.

Für eine passgenaue Aufnahme der metallischen Membran 114 zum Verschluss der zentralen Durchbrechung 101b ist vorzugsweise eine umlaufende Vertiefung 1010b vorgesehen, die die zentrale Durchbrechung 101b umgibt.

Weiterhin sind in dieser Ausführungsform drei sternförmig angeordnete Schwächungsstrukturen in Form der nach innen offenen Nuten 101c vorgesehen, die durch eine teilkreisförmige Verbindungslinie 1010c miteinander verbunden sind. Diese Schwächungsstrukturen 101c und 1010c dienen als Sekundärsicherung gegen einen internen Überdruck. Alternativ zu der Anbringung der Schwächungsstrukturen von innen am Gehäuseboden können solche Schwächungsstrukturen, beispielsweise Ritzlinien, auch von außen angebracht sein.

Außen auf dem Gehäuseboden 101a können weiterhin ein oder mehrere Beschriftungsfelder 1010a vorgesehen sein, die für die Anbringung von verschiedenen schriftlichen Informationen genutzt werden können.

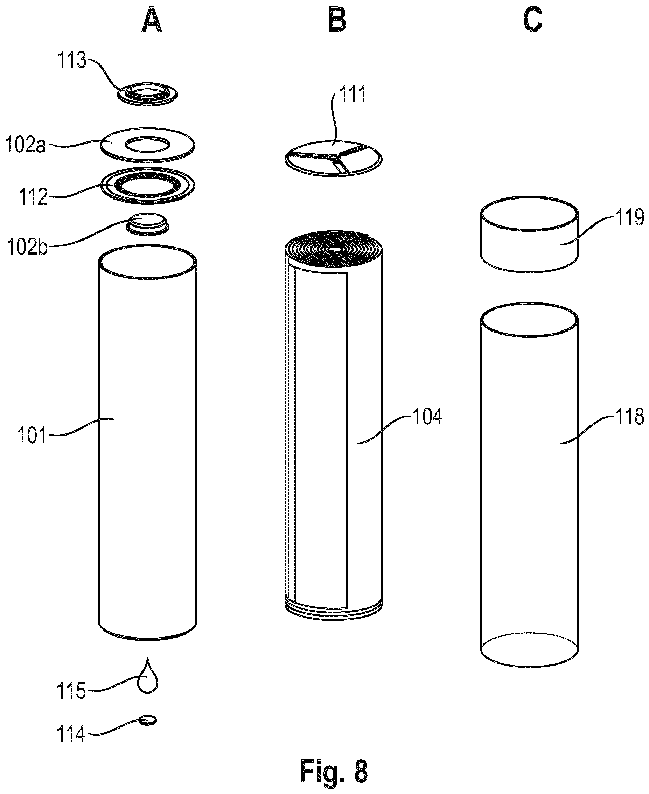

Die nachfolgenden Fig. 8 bis 10 illustrieren verschiedene Details im Zusammenhang mit der Herstellung der erfindungsgemäßen Energiespeicherzellen.

Fig. 8A-C zeigt in Explosionsdarstellungen die verschiedenen Komponenten einer bevorzugten Ausführungsform einer erfindungsgemäßen Energiespeicherzelle. Aus Fig. 8A gehen die Komponenten des Gehäuses mit dem Gehäusebecher 101, dem Anschlusspol 102b, der O-Ringförmigen Isolierscheibe 112, der Deckelplatte 102 mit der zentralen Aussparung, in die der Anschlusspol 102b eingreift, sowie der Vergussmasse 113 hervor. Unterhalb des Gehäusebechers 101 ist der Verschluss für die Energiespeicherzelle in Form der metallischen Membran 114 gezeigt, wobei dieser Verschluss nach der Befüllung der montierten Zelle mit dem hier schematisch angedeuteten Elektrolyt 115 angebracht wird.

Fig. 8B zeigt den wickelförmigen Elektroden-Separator-Verbund 104 und das daran anzubringende Kontaktblech 111. Der wickelförmige Elektroden-Separator-Verbund 104 kann in an sich bekannter Weise durch Wicklung der Elektrodenbänder und der Separatoren insbesondere auf einer Wickelmaschine hergestellt werden. Zum Abschluss der Wickelform kann in bevorzugter Weise beispielsweise mit einem konischen Druckstück die äußerste Wickelwindung um beispielsweise 30° bis 45° nach innen gebogen werden, so dass die Wickelform stabilisiert wird. Auf die äußere Umfangsfläche des Wickels wird anschließend vorzugsweise ein Klebeband 118 (Fig. 8C), beispielsweise aus Polypropylen, angebracht, das neben der stabilisierenden Funktion gegebenenfalls auch eine elektrisch isolierende Funktion in der Zelle übernimmt. Nach dieser Stabilisierung des wickelförmigen Elektroden-Separator-Verbunds 104 kann das scheibenförmige Kontaktblech 111, das beispielsweise aus Kupfer gebildet ist, lose auf die obere Stirnseite des Wickels gelegt werden und mit einem besonders stabilen Klebeband 119 aus beispielsweise Polyimid fixiert werden. Hierfür kann beispielsweise ein Band aus Kapton^{®} mit einer Dicke von 50 µm verwendet werden.

Anschließend wird der Elektroden-Separator-Verbund 104 mit dem angebrachten Kontaktblech 111 in das becherförmige Gehäuseteil 101 eingesetzt. Nach einer gegebenenfalls kameragestützten Ausrichtung der Sicken im Gehäuseboden und in dem Kontaktblech kann mithilfe geeigneter Presswerkzeuge die Anordnung verpresst werden und von oben und unten zur Kontaktierung der Längsränder der Elektrodenbänder mit den jeweiligen Sicken simultan oder sequenziell laserverschweißt werden. Anschließend kann der Anschlusspol 102b auf das Kontaktblech 111 aufgesetzt und aufgeschweißt werden.

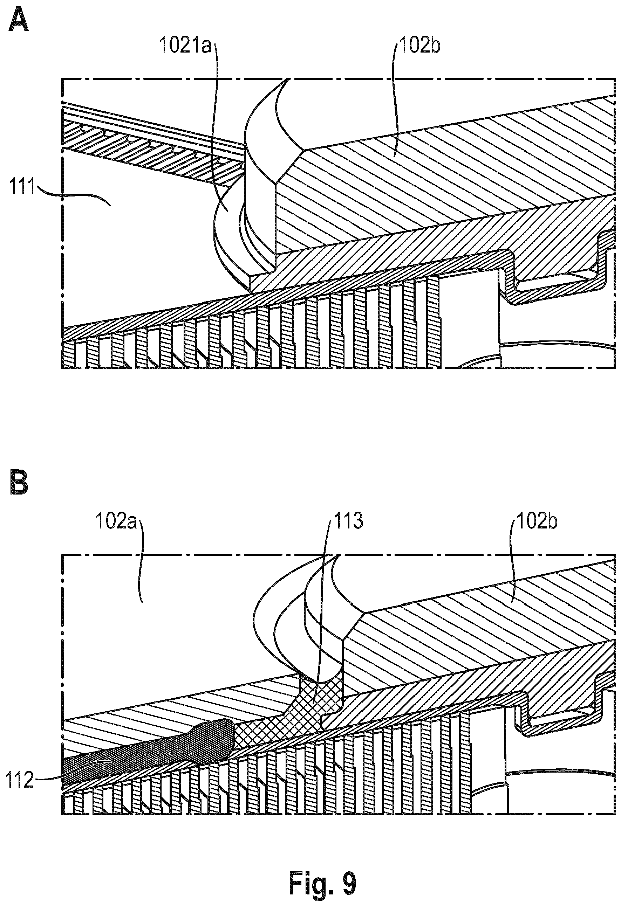

**Fig. 9A****,B** zeigt Details der Fertigung der Deckelbaugruppe der Zelle. Aus Fig. 9A geht eine Detailansicht des Aufschweißens des Anschlusspols 102b auf dem Kontaktblech 111 hervor, wobei der Laser schräg oder vertikal insbesondere im Bereich der umlaufenden Schweißschulter 1021a des Anschlusspols 102b angreifen kann. In Fig. 9B ist dargestellt, wie danach die Isolierscheibe 112 eingelegt und auf die richtige Höhe gedrückt werden kann, bevor die Deckelplatte 102a aufgelegt und von schräg, vertikal oder horizontal mit dem hier nicht dargestellten becherförmigen Gehäuseteil verschweißt wird. Nun kann der Anschlusspol 102b gegebenenfalls auf die richtige Höhe in Bezug zu der Zellschulter, die von der oberen Seite der Deckelplatte 102a gebildet wird, gedrückt werden. Der hierfür vorgesehene Abstand kann beispielsweise 1 mm zwischen der Oberseite des Anschlusspols 102b und der Oberseite der Deckelplatte 102a betragen. Der Spalt zwischen der Deckelplatte 102a und dem Anschlusspol 102b wird mit einer Vergussmasse 113 ausgegossen, um so diesen Teil der Energiespeicherzelle luftdicht und flüssigkeitsdicht zu verschließen.

Anschließend kann die Energiespeicherzelle in einen Ofen überführt werden, um die Vergussmasse 113 abzubinden und die Restfeuchte des wickelförmigen Elektroden-Separator-Verbunds auszuheizen.

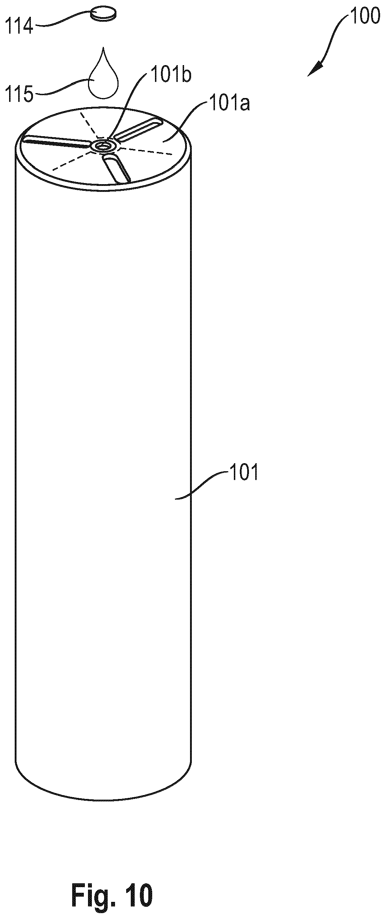

**Fig. 10** illustriert das abschließende Befüllen mit Elektrolyt 115, der von der Unterseite der Energiespeicherzelle 100 (in dieser Darstellung oben) durch die Durchbrechung 101b im Gehäuseboden 101a eingefüllt wird. Abschließend wird die metallische Membran 114 als Verschluss auf der Öffnung im Gehäuseboden 101a bzw. als Verschluss auf die zentrale Durchbrechung 101b aufgebracht. Hierfür kann beispielsweise mit einem vertikalen Laserstrahl gearbeitet werden.

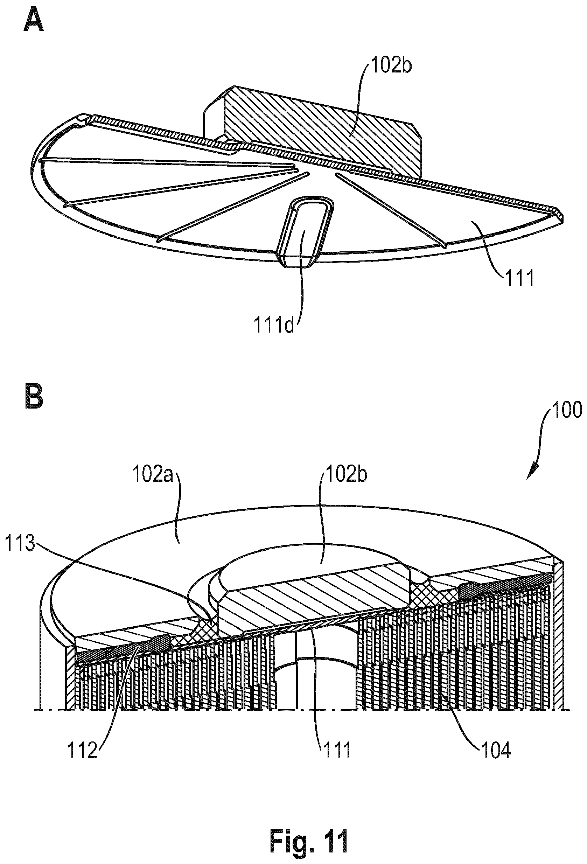

**Fig. 11** illustriert eine alternative Möglichkeit zur Montage der Deckelbaugruppe. Fig. 11A zeigt das Kontaktblech 111 mit daran angebrachtem Anschlusspol 102b in einer geschnitten Ansicht schräg von unten. Fig. 11B zeigt die oberen Stirnseitenbereich der Zelle in einem Längsschnitt.

Bei diesem alternativen Fertigungsverfahren wird der Anschlusspol 102b vorab auf das Kontaktblech 111 geschweißt. Hierfür kann eine Reibschweißung oder eine Rührreibschweißung eingesetzt werden.

Bei der Ausgestaltung des Kontaktblechs 111 in dieser Ausführungsform können die sternförmig angeordneten Sicken 111d des Kontaktblechs 111 gegebenenfalls verkürzt werden, da sie bei der nachfolgenden Anschweißung des Elektroden-Separator-Verbunds von dem Anschlusspol 102b abgedeckt werden. Insgesamt steht daher etwas weniger Schweißfläche für die Kontaktierung des Längsrands des jeweiligen Elektrodenbands mit dem Kontaktblech 111 zur Verfügung. Allerdings kann diese Ausgestaltung für die Montage Vorteile bieten.

Da die Anbringung des Anschlusspols 102b direkt auf dem Kontaktblech 111 außerhalb der Gehäusebecherbaugruppe unter Umständen einfacher durchführbar ist, kann gegebenenfalls auf eine zentrale Vertiefung in dem Kontaktblech und auf einen korrespondierenden Stift bei dem Anschlusspol 102b verzichtet werden.

Die weitere Montage der Energiespeicherzelle mit dem Anschlusspol 102b, der bereits direkt auf die Kontaktplatte 111 aufgeschweißt ist, unterscheidet sich im Prinzip nicht von dem vorab beschriebenen Herstellungsverfahren für die Energiespeicherzelle 100.

## Patentansprüche

**1.** Energiespeicherelement (100) mit den Merkmalen
a. Es umfasst ein luft- und flüssigkeitsdicht verschlossenes Gehäuse und einen darin angeordneten Elektroden-Separator-Verbund (104),
b. das Gehäuse umfasst ein metallisches, becherförmig ausgebildetes Gehäuseteil (101), das einen Gehäuseboden (101a), eine umlaufende Seitenwand und eine endständige Öffnung umfasst,
c. das Gehäuse umfasst ein Deckelbauteil (102), das die endständige Öffnung des becherförmig ausgebildeten Gehäuseteils (101) verschließt,
d. das Deckelbauteil (102) umfasst eine metallische Deckelplatte (102a) und einen Anschlusspol (102b), der durch eine Durchbrechung in der Deckelplatte (102) geführt und gegenüber der Deckelplatte (102) elektrisch isoliert ist,
e. der Elektroden-Separator-Verbund (104) umfasst eine erste flache endständige Stirnseite (104a) und eine zweite flache endständige Stirnseite (104b),
f. der Elektroden-Separator-Verbund (104) umfasst eine Anode (105) mit einem Anodenstromkollektor (106), der einen ersten Rand (106a) und einen dazu parallelen zweiten Rand aufweist,
g. der Anodenstromkollektor (106) umfasst einen Hauptbereich, der mit einer Schicht aus negativem Elektrodenmaterial (107) beladen ist, sowie einen freien Randstreifen (106b), der sich entlang seines ersten Rands (106a) erstreckt und der nicht mit dem Elektrodenmaterial (107) beladen ist,
h. der Elektroden-Separator-Verbund (104) umfasst eine Kathode (108) mit einem Kathodenstromkollektor (109), der einen ersten Rand (109a) und einen dazu parallelen zweiten Rand aufweist,
i. der Kathodenstromkollektor (109) umfasst einen Hauptbereich, der mit einer Schicht aus positivem Elektrodenmaterial (110) beladen ist, sowie einen freien Randstreifen (109b), der sich entlang seines ersten Rands (109a) erstreckt und der nicht mit dem Elektrodenmaterial (110) beladen ist,
j. die Anode (105) und die Kathode (108) sind innerhalb des Elektroden-Separator-Verbunds (104) derart angeordnet, dass der erste Rand (106a) des Anodenstromkollektors (106) aus der ersten endständigen Stirnseite (104a) und der erste Rand (109a) des Kathodenstromkollektors (109) aus der zweiten endständigen Stirnseite (104b) des Elektroden-Separator-Verbunds (104) austritt,
k. das Energiespeicherelement umfasst ein Kontaktblech (111), das unmittelbar auf dem ersten Rand (106a) des Anodenstromkollektors (106) oder auf dem ersten Rand (109a) des Kathodenstromkollektors (109) aufsitzt,
l. das Kontaktblech (111) ist mit dem durch die Durchbrechung in der Deckelplatte (102a) geführten Anschlusspol (102b) elektrisch verbunden,
m. der nicht mit dem Kontaktblech (111) in unmittelbarem Kontakt stehende erste Rand (109a, 106a) des Kathodenstromkollektors (109) oder des Anodenstromkollektors (106) ist elektrisch mit dem Gehäuseboden (101a) verbunden,
n. Der Anschlusspol (102b) sitzt unmittelbar auf dem Kontaktblech (111) auf und ist mit diesem durch Verschweißung verbunden.
o. Der Anschlusspol (102b) ist durch eine ausgehärtete Vergussmasse (113) aus einem elektrisch isolierenden Kunststoffmaterial von der Deckelplatte (102) elektrisch isoliert.

**2.** Energiespeicherelement nach einem der vorhergehenden Ansprüche mit mindestens einem der folgenden zusätzlichen Merkmale:
a. Zwischen der Deckelplatte (102) und dem Kontaktblech (111) befindet sich ein ringförmiger Spalt, der mit der Vergussmasse (113) befüllt ist.
b. Der ringförmige Spalt wird radial nach außen durch eine O-Ring-förmige Isolierscheibe (112) aus einem elektrisch isolierenden Kunststoffmaterial begrenzt.

**3.** Energiespeicherelement nach Anspruch 1 oder Anspruch 2 mit mindestens einem der folgenden zusätzlichen Merkmale:
a. Das becherförmig ausgebildete Gehäuseteil (101) ist elektrisch mit der Kathode verbunden.
b. Das Kontaktblech (111) sitzt auf dem ersten Rand (106a) des Anodenstromkollektors (106) auf und ist mit diesem durch Verschweißung verbunden.
c. Das becherförmig ausgebildete Gehäuseteil (101) besteht aus Aluminium oder einer Aluminiumlegierung.
d. Die Deckelplatte (102a) besteht aus Aluminium oder einer Aluminiumlegierung.
e. Das Kontaktblech (111) steht in unmittelbarem Kontakt mit dem durch die Durchbrechung in der Deckelplatte (102a) geführten Anschlusspol (102b) und ist bevorzugt mit diesem durch Verschweißung verbunden.

**4.** Energiespeicherelement nach Anspruch 1 oder Anspruch 2 mit mindestens einem der folgenden zusätzlichen Merkmale:
a. Das becherförmig ausgebildete Gehäuseteil (101) ist elektrisch mit der Anode verbunden.
b. Das Kontaktblech (111) sitzt auf dem ersten Rand (109a) des Kathodenstromkollektors (109) auf und ist mit diesem durch Verschweißung verbunden.
c. Das becherförmig ausgebildete Gehäuseteil (101) besteht aus Kupfer oder Nickel oder einer Kupfer- oder Nickellegierung oder Stahl oder vernickeltem Stahl.
d. Die Deckelplatte (102a) besteht aus Kupfer oder Nickel oder einer Kupfer- oder Nickellegierung oder Stahl oder vernickeltem Stahl.
e. Das Kontaktblech (111) steht in unmittelbarem Kontakt mit dem durch die Durchbrechung in der Deckelplatte (102a) geführten Anschlusspol (102b) und ist bevorzugt mit diesem durch Verschweißung verbunden.

**5.** Energiespeicherelement nach einem der vorhergehenden Ansprüche mit mindestens einem der folgenden zusätzlichen Merkmale:
a. Das Kontaktblech (111) besteht aus Nickel oder Kupfer oder Titan oder eine Nickel- oder Kupfer- oder Titanlegierung oder Edelstahl.
b. Der Anschlusspol (102b) ist ein Bimetall-Anschlusspol und umfasst ein Polunterteil (1021) aus Nickel oder Kupfer oder Titan oder einer Nickel- oder Kupfer- oder Titanlegierung oder Edelstahl und ein Poloberteil (1020) aus Aluminium oder einer Aluminiumlegierung.
c. Das Polunterteil (1021) ist an das Kontaktblech (111) geschweißt.
d. Das Polunterteil (1021) und das Kontaktblech (111) und der Anodenstromkollektor (106) bestehen aus dem gleichen Material.

**6.** Energiespeicherelement nach einem der Ansprüche 1 bis 4 mit mindestens einem der folgenden zusätzlichen Merkmale:
a. Das Kontaktblech (111) besteht aus Aluminium oder aus einer Aluminiumlegierung.
b. Der Anschlusspol (102b) besteht aus Aluminium oder einer Aluminiumlegierung.
c. Das Kontaktblech (111) und der Anschlusspol (102b) und Kathodenstromkollektor(109) bestehen aus dem gleichen Material.

**7.** Energiespeicherelement nach einem der vorhergehenden Ansprüche mit mindestens einem der folgenden zusätzlichen Merkmale:
a. Das Kontaktblech (111) weist eine bevorzugt gleichmäßige Dicke im Bereich von 50 µm bis 600 µm, bevorzugt im Bereich von 150 µm bis 350 µm, auf.
b. Das Kontaktblech (111) weist zwei sich gegenüberliegenden Flachseiten auf und erstreckt sich im Wesentlichen nur in einer Dimension.
c. Das Kontaktblech (111) ist eine Scheibe oder eine polygonale Platte.
d. Das Kontaktblech (111) ist derart dimensioniert, dass es mindestens 40 % der Stirnseite, bevorzugt mindestens 60 %, besonders bevorzugt mindestens 80 %, der Stirnseite (104a, 104b), aus der der Rand (106a, 109a) des Stromkollektors (106, 109), auf dem es aufsitzt, austritt, abdeckt.
e. Das Kontaktblech (111) weist mindestens eine Sicke (111d) auf, die auf einer Flachseite des Kontaktblechs (111) als längliche Vertiefung und auf der gegenüberliegenden Flachseite als längliche Erhöhung zu Tage tritt, wobei das Kontaktblech (111) mit der Flachseite, welche die längliche Erhöhung trägt, dem ersten Rand (106a) des Anodenstromkollektors (106) oder auf dem ersten Rand (109a) des Kathodenstromkollektors (109) aufsitzt.
f. Das Kontaktblech (111) ist im Bereich der Sicke (111d) mit dem ersten Rand (106a) des Anodenstromkollektors (106) oder dem ersten Rand (109a) des Kathodenstromkollektors (109) verschweißt.

**8.** Energiespeicherelement nach einem der vorhergehenden Ansprüche mit den folgenden zusätzlichen Merkmalen:
a. der Gehäuseboden (101a) des becherförmig ausgebildeten Gehäuseteils (101) weist eine Primärsicherung gegen internen Überdruck in Form einer Durchbrechung (101b), die mittels einer metallischen Membran (114) verschlossen ist, auf,
b. der Gehäuseboden (101a) des becherförmig ausgebildeten Gehäuseteils (101) weist eine Sekundärsicherung gegen internen Überdruck in Form mindestens einer Nut (101c) auf seiner Innenseite oder seiner Außenseite auf.

**9.** Energiespeicherelement nach einem der vorhergehenden Ansprüche mit den folgenden zusätzlichen Merkmalen:
a. Die metallische Membran (114) ist durch Verschweißung am Boden (101a) des becherförmig ausgebildeten Gehäuseteils (101) fixiert.

**10.** Energiespeicherelement nach einem der vorhergehenden Ansprüche mit mindestens einem der folgenden zusätzlichen Merkmale:
a. Der Gehäuseboden (101a) weist mindestens eine Sicke (101d) auf, die auf seiner Außenseite als längliche Vertiefung und auf seiner Innenseite als längliche Erhöhung zu Tage tritt, wobei der erste Rand (106a) des Anodenstromkollektors (106) oder der erste Rand (109a) des Kathodenstromkollektors (109) auf der Innenseite aufsitzt.
b. Der Gehäuseboden (101a) ist im Bereich der Sicke (101d) mit dem ersten Rand (106a) des Anodenstromkollektors (106) oder dem ersten Rand (109a) des Kathodenstromkollektors (109) verschweißt.
c. Die Durchbrechung (101b) ist im Zentrum des Gehäusebodens (101a) positioniert.
d. Die mindestens eine Sicke (101d) umfasst mehrere lineare Sicken, insbesondere drei Sicken, die in sternförmiger Anordnung um die Durchbrechung (101b) herum angeordnet sind.
e. Die mindestens eine Nut (101c) umfasst mehrere lineare Teilabschnitte, die in sternförmiger Anordnung um die Durchbrechung (101b) herum angeordnet sind.
f. Die mindestens eine Nut (101c) umfasst einen um die Durchbrechung (101b) herumlaufenden Teilabschnitt (1010c), der die sternförmig angeordneten linearen Teilabschnitte miteinander verbindet.

**10.** Verfahren zur Herstellung eines Energiespeicherelements nach einem der vorhergehenden Ansprüche mit den folgenden Schritten:
a. Bereitstellung eines metallischen, becherförmig ausgebildeten Gehäuseteils (101), das einen Gehäuseboden (101a), eine umlaufende Seitenwand und eine endständige Öffnung umfasst,
b. Bereitstellung eines Elektroden-Separator-Verbunds (104) der
- eine Kathode (108) mit einem Kathodenstromkollektor (109), der einen ersten Rand (109a) und einen dazu parallelen zweiten Rand aufweist,
- eine Anode (105) mit einem Anodenstromkollektor (106), der einen ersten Rand (106a) und einen dazu parallelen zweiten Rand aufweist, sowie
- eine erste flache endständige Stirnseite (104a) und eine zweite flache endständige Stirnseite (104b) aufweist,
wobei,
- der Anodenstromkollektor (106) einen Hauptbereich, der mit einer Schicht aus negativem Elektrodenmaterial (107) beladen ist, sowie einen freien Randstreifen (106b), der sich entlang seines ersten Rands (106a) erstreckt und der nicht mit dem Elektrodenmaterial (107) beladen ist, umfasst,
wobei
- der Kathodenstromkollektor (109) einen Hauptbereich, der mit einer Schicht aus positivem Elektrodenmaterial (110) beladen ist, sowie einen freien Randstreifen (109b), der sich entlang seines ersten Rands (109a) erstreckt und der nicht mit dem Elektrodenmaterial (110) beladen ist, umfasst,
wobei
- die Anode (105) und die Kathode (108) innerhalb des Elektroden-Separator-Verbunds (104) derart angeordnet sind, dass der erste Rand (106a) des Anodenstromkollektors (106) aus der ersten endständigen Stirnseite (104a) und der erste Rand (109a) des Kathodenstromkollektors (109) aus der zweiten endständigen Stirnseite (104b) des Elektroden-Separator-Verbunds (104) austritt,
c. Einschieben des Elektroden-Separator-Verbunds (104) in den Gehäusebecher (101), so dass der erste Rand (106a, 109a) des Anodenstromkollektors (106) oder der erste Rand (109a) des Kathodenstromkollektors (109) auf dem Gehäuseboden (101a) aufsitzt.
d. In die endständige Öffnung des becherförmig ausgebildeten Gehäuseteils (101) wird eine Deckelplatte (102a) eingesetzt, die eine Durchbrechung für den Anschlusspol (102b) aufweist.
e. Ein zwischen der Deckelplatte (102a) und dem Kontaktblech (111) verbleibender Spalt wird mit einer Vergussmasse (113) gefüllt, die in ausgehärtetem Zustand die Deckelplatte (102a) von dem Anschlusspol (102b) und von dem Kontaktblech (111) elektrisch isoliert.

**11.** Verfahren zur Herstellung eines Energiespeicherelements nach Anspruch 10 mit mindestens einem der folgenden zusätzlichen Schritte:
a. Ein Kontaktblech (111) wird auf dem ersten Rand (106a) des Anodenstromkollektors (106) oder dem ersten Rand (109a) des Kathodenstromkollektors (109), der nicht auf dem Gehäuseboden (101a) aufsitzt, positioniert, und durch Verschweißung mit diesem Rand (106a, 109a) verbunden.
b. Ein Anschlusspol (102b) wird auf dem Kontaktblech (111) fixiert.

**12.** Verfahren zur Herstellung eines Energiespeicherelements nach Anspruch 10 oder Anspruch 11 mit den folgenden zusätzlichen Schritten:
a. Herstellen einer Schweißverbindung zwischen dem auf dem Gehäuseboden (101a) aufsitzenden ersten Rand (106a, 109a) und dem Gehäuseboden,
wobei
b. in den Gehäuseboden (101a) des becherförmig ausgebildeten Gehäuseteils (101)
- eine Primärsicherung gegen internen Überdruck in Form einer Durchbrechung (101b), die mittels einer metallischen Membran (114) verschlossen ist, und
- eine Sekundärsicherung gegen internen Überdruck in Form mindestens einer Nut (101c) auf seiner Innenseite oder seiner Außenseite
integriert wird.
